# EUROPEAN PATENT APPLICATION

(11) **EP 4 818 607 A1**
(43) Date of publication of application: **07.10.2026**
(21) Application number: 26169195.0
(22) Date of filing: 30.03.2026
(51) Int. Cl.: F25C 5/04, F25C 5/06, F25C 5/20, F25D 23/02, F25D 23/04, F16H 1/32, F25C 5/14

(54) **REFRIGERATOR**

(30) Priority: 04.04.2025 KR 20250044129
(71) Applicant: LG Electronics Inc., Yeongdeungpo-gu Seoul 07336 (KR)
(72) Inventor: KIM, Bongjin, 07796 Seoul (KR); LEE, Donghoon, 07796 Seoul (KR); YEOM, Seungseob, 07796 Seoul (KR); LEE, Wookyong, 07796 Seoul (KR)
(74) Representative: Vossius & Partner Patentanwälte Rechtsanwälte mbB

(57) **Abstract**

A refrigerator includes an ice-making body having a circumferential portion configured to receive water, and a motor for driving the ice-making body. The ice-making body is connected to the motor and configured rotate by driving force of the motor. The refrigerator further includes a power transmission configured to transmit the driving force of the motor to the ice-making body.

## Description

### TECHNICAL FIELD

The present disclosure relates to a refrigerator.

### BACKGROUND

A refrigerator is an appliance that may store food at a low temperature in an internal storage space shielded by a door. The refrigerator cools the inside of the storage space by using cold air, thereby keeping stored food in a refrigerated state or a frozen state.

In some cases, an ice maker for making ice is provided in a freezing space of the refrigerator. The ice maker receives water supplied from a water supply source or a water tank in a tray, and then cools the water to generate ice. The ice generated by the ice maker may be stored in an ice bin. The user may open a freezing space door, approach the ice bin, and take out the ice of the ice bin.

In some cases, where ice is formed hard, a child, an elderly person, or a consumer having weak teeth may feel discomfort when chewing the ice.

### SUMMARY

The present application describes apparatus and method configured to generate chewable ice having reduced hardness.

The present application describes a refrigerator capable of manufacturing ice having strength to an extent that a consumer may chew and eat.

The present application describes a refrigerator capable of providing a tray including a peripheral surface in which ice is generated, and cooling water supplied to the peripheral surface to manufacture thin ice (ice in a first state).

The present application describes a refrigerator capable of providing a blade on one side of the tray to separate the thin ice from the peripheral surface and manufacture powdered ice (ice in a second state).

The present application describes a refrigerator capable of compressing the powdered ice to manufacture molded ice (ice in a third state) having a predetermined strength.

The present application describes a refrigerator capable of driving a single driving device including one motor to perform driving of a tray for generating powered ice and driving of a piston for compressing the powdered ice.

The present application describes a refrigerator capable of controlling driving of the motor such that the driving of the tray and the driving of the piston may be sequentially performed.

The present application describes a refrigerator capable of easily performing driving of the tray and driving of the piston by including a first gear configured to transmit driving force of a motor to the tray and a second gear configured to guide movement of a rack gear and a piston in association with the first gear.

The present application describes a refrigerator in which the tray rotates in a first direction (for example, a counterclockwise direction) during a deicing operation that separates ice from the tray and rotates in a second direction (for example, a clockwise direction) during a compression operation that compresses the separated ice, such that the deicing operation and the compression operation may be easily performed.

The present application describes a refrigerator capable of easily performing driving of the tray and driving of the piston by including a driving gear configured to transmit driving force of a motor to the tray and a plurality of driven gears engaged with the driving gear.

The present application describes a refrigerator in which the tray rotates only in one direction (for example, a counterclockwise direction or a clockwise direction) during a deicing operation and a compression operation, such that the deicing operation and the compression operation may be easily performed.

The present application describes a refrigerator in which, so that cooling of the tray is rapidly performed by supplied cold air, the tray is made of a material having high thermal conductivity, for example, a metal material.

The present application describes a refrigerator in which, so that ice-making performance in the tray may be improved, a part of the peripheral surface among the peripheral surfaces of the tray, namely a first peripheral surface, forms a space or surface for ice-making, and another part of the peripheral surface, namely a second peripheral surface, does not form a space or surface for ice-making.

The present application describes a refrigerator in which a first circumferential surface of a tray forms a first radial distance from a center of the tray such that the first circumferential surface may be immersed in or contacted with water of a reservoir.

The present application describes a refrigerator in which a second circumferential surface of the tray forms a second radial distance from the center of the tray such that the second circumferential surface is not immersed in or contacted with the water of the reservoir. In this case, the second radial distance is formed to be shorter than the first radial distance.

The present application describes a refrigerator in which at least one of a recess and a protrusion is formed on a circumferential surface of a tray to improve ice-making performance of the tray, and a space or surface for generating ice may be formed on at least one of the recess and the protrusion.

The present application describes a refrigerator in which a tray hole is formed in a tray to increase a cooling area of the tray, and a cold air flow path may be formed through the tray hole.

The present application describes a refrigerator including a reservoir configured to store water, wherein at least a portion of a tray is arranged to be immersed in the reservoir such that water may be smoothly supplied to a circumferential surface of the tray.

In some implementations, a refrigerator may include a tray having a circumferential surface (or a circumferential wall) to which water is supplied and a motor configured to drive the tray. In some examples, a liquid other than water may also be supplied to the circumferential surface.

The tray may be rotatably provided by being connected to the motor in an axial direction.

The refrigerator may include a power transmission device configured to transmit driving force of the motor to the tray.

As an example, the power transmission device may include a gear assembly, and the gear assembly may include a first gear connected to a shaft of the motor and a second gear engaged with the first gear.

The motor may include a reversible motor configured to provide driving force such that the first gear may rotate in both forward and reverse directions.

The first gear may be axially coupled to the tray to rotate the tray.

The second gear may be engaged with a rack gear for linear movement of a piston.

The refrigerator may include a cylinder configured to receive ice separated from the circumferential surface of the tray, and the piston may be arranged to be reciprocally movable to compress or recombine the ice received in the cylinder.

The refrigerator may include a gear lever supported by the first gear, and the gear lever may be rotatably disposed on a protrusion of the first gear.

During a deicing operation of the tray, the first gear may rotate in a first direction (for example, a counterclockwise direction), and in this case the first gear and the second gear may not be engaged with each other.

During a compression or recombination operation of the piston, the first gear may rotate in a second direction (for example, a clockwise direction), and in this case gear teeth of the first gear and the second gear may be arranged such that the first gear and the second gear are engaged with each other.

The second gear may include an interference protrusion configured to contact the gear lever. When the first gear rotates in the first direction, the gear lever may ride over the interference protrusion, and thereafter, when the first gear rotates in the second direction, the gear lever may push the interference protrusion such that engagement between the first gear and the second gear may start.

When the second gear rotates in the first direction (for example, the counterclockwise direction), the piston may move toward the cylinder by engagement between the second gear and the rack gear to compress or recombine ice in the cylinder.

When the second gear rotates in the second direction (for example, the clockwise direction), the piston may move away from the cylinder by engagement between the second gear and the rack gear.

As another example, the power transmission device may include a gear assembly, and the gear assembly may include a driving gear connected to the shaft of the motor and at least two driven gears engaged with the driving gear.

The two driven gears may include a first driven gear and a second driven gear engaged with each other.

The motor may include a one-direction motor configured to provide driving force such that only one-direction rotation (for example, forward rotation) of the driving gear is possible.

The second gear may be axially coupled to the tray to rotate the tray.

The first gear may include two sub-gears. Among the two sub-gears, a first sub-gear may guide a compression operation of the piston moving toward the cylinder by being engaged with the first driven gear. The first sub-gear may be referred to as a "compression gear".

Among the two sub-gears, a second sub-gear may guide a return operation of the piston moving away from the cylinder by being engaged with the second driven gear. The second sub-gear may be referred to as a "return gear".

The first sub-gear and the second sub-gear may be integrally connected to a shaft of the first gear and may be spaced apart from each other in the axial direction.

The second driven gear may be engaged with a rack gear for linear movement of the piston.

The circumferential surface of the tray may include a portion extending in a rounded shape.

The circumferential surface of the tray may include a portion having an arc shape.

The circumferential surface of the tray may include a portion having a circular shape.

The tray may include a drum.

In one aspect of the present disclosure, a refrigerator may include a cabinet defining a storage space, a door configured to open and close the storage space, a tray rotatably provided in the door and having a circumferential surface configured to receive water, a cylinder defining a space configured to receive ice separated from the circumferential surface, and a motor configured to provide driving force to the tray.

The refrigerator may include a gear assembly configured to transmit driving force of the motor to the tray and a piston configured to move linearly in association with the gear assembly to guide ice separated from the circumferential surface to the cylinder.

The refrigerator may include a reservoir provided at one side of the tray and configured to store water to be supplied to the circumferential surface of the tray.

The refrigerator may include a blade that is disposed at one side of the cylinder and faces the circumferential surface so as to contact ice formed on the circumferential surface.

The circumferential surface of the tray may include a first circumferential surface arranged to have a first radial distance from a center of the tray and configured to receive water.

The circumferential surface of the tray may include a second circumferential surface arranged to have a second radial distance smaller than the first radial distance such that water is not supplied thereto.

The gear assembly may include a first gear connected to the motor and the tray.

The gear assembly may include a second gear engaged with the first gear, and the first gear and the second gear may be configured as incomplete gears in which gear teeth are formed only on a portion of outer circumferential surfaces thereof.

The motor is configured to be driven in both directions such that rotation of the first gear in a first direction and a second direction is possible.

The refrigerator may include a gear lever rotatably supported by the first gear and configured to contact an interference protrusion of the second gear, and a lever spring including a first end connected to the gear lever and a second end supported by the first gear.

The refrigerator may include a bracket configured to support the gear assembly, and wherein the bracket may include a receiving bracket configured to support a central portion of the second gear and a stopper inserted into a guide groove of the second gear.

The refrigerator may include a torsion spring having both ends supported by the second gear and the bracket.

The gear assembly may include a rack gear engaged with the second gear and connected to the piston.

The first gear may include a compression gear portion and a return gear portion arranged in the axial direction, and the compression gear portion and the return gear portion may be connected to a central shaft to rotate together.

The compression gear portion and the return gear portion may be configured as incomplete gears in which gear teeth are formed only on portions of outer circumferential surfaces thereof.

The motor may be configured to be driven in only one direction such that only rotation of the first gear in the first direction is possible.

The gear assembly may include a second gear engaged with the compression gear portion and having an axial width greater than that of the compression gear portion such that the second gear is not engaged with the return gear portion, and a third gear engaged with the second gear.

The third gear may be engaged with the return gear portion and may have an axial width greater than that of the return gear portion such that the third gear is not engaged with the compression gear portion.

The refrigerator may include a rack gear engaged with the third gear and connected to the piston.

In another aspect of the present disclosure, a refrigerator may include a cabinet defining a storage space, a door configured to open and close the storage space, a tray rotatably provided in the cabinet or the door and configured to receive water, a blade disposed adjacent to the tray to separate ice formed on the tray, and a cylinder extending in a tangential direction to an outer circumferential surface of the tray and configured to receive ice separated by the blade.

The refrigerator may include a piston configured to move toward the cylinder or away from the cylinder at one side of the cylinder, a motor configured to generate driving force for rotation of the tray, and a gear assembly configured to transmit driving force of the motor to the piston.

The gear assembly may include a first gear connected to the tray and configured to support a lever gear, and a second gear engaged with the first gear and including a protrusion configured to contact the lever gear.

The gear assembly may include a first gear connected to the tray and including a compression gear portion and a return gear portion, a second gear engaged with the compression gear portion of the first gear and a third gear engaged with the return gear portion of the first gear.

In still another aspect of the present disclosure, a refrigerator may include a cabinet that defines a storage space; a door configured to open and close at least a portion of the storage space; an ice-making body rotatably provided at the cabinet or the door and configured to receive water and to generate ice; a blade disposed adjacent to the ice-making body and configured to separate the ice from the ice-making body; a cylinder that extends in direction tangential to an outer circumferential surface of the ice-making body, the cylinder being configured to receive the ice separated by the blade; and a piston disposed at a side of the cylinder and configured to move toward the cylinder and away from the cylinder;

The refrigerator further includes a motor configured to generate driving force for rotation of the ice-making body and a gear assembly configured to transmit the driving force of the motor to the piston.

The gear assembly comprises: a lever gear; a first gear that is connected to the ice-making body and supports the lever gear; and a second gear engaged with the first gear, the second gear comprising a protrusion configured to contact the lever gear.

The gear assembly comprises: a first gear connected to the ice-making body, the first gear comprising a compression gear portion and a return gear portion; a second gear engaged with the compression gear portion of the first gear; and a third gear engaged with the return gear portion of the first gear.

In some implementations, since ice having strength to an extent that a consumer may chew and eat may be manufactured, consumer satisfaction may increase.

In some implementations, by providing a tray including a peripheral surface in which ice is generated, and cooling water supplied to the peripheral surface, thin ice (ice in a first state) may be easily manufactured.

In some implementations, by providing a blade on one side of the tray to separate the thin ice from the peripheral surface, powdered ice (ice in a second state) may be easily manufactured.

In some implementations, by compressing the powdered ice, molded ice (ice in a third state) having a predetermined strength may be easily manufactured.

In some implementations, by driving a single driving device including one motor, driving of a tray and driving of a piston for compressing powder ice may be easily performed.

In some implementations, by controlling driving of the motor, driving of the tray for generating ice and separating ice from the tray and driving of the piston for compressing the powdered ice may be sequentially and easily performed.

In some implementations, driving of the tray and driving of the piston may be easily performed by including a first gear configured to transmit driving force of a motor to the tray and a second gear configured to guide movement of a rack gear and a piston in association with the first gear.

In some implementations, the tray rotates in a first direction (for example, a counterclockwise direction) during a deicing operation and rotates in a second direction (for example, a clockwise direction) during a compression operation, such that the deicing operation and the compression operation may be easily performed.

In some implementations, driving of the tray and driving of the piston may be easily performed by including a driving gear configured to transmit driving force of a motor to the tray and a plurality of driven gears engaged with the driving gear.

In some implementations, the tray rotates only in one direction (for example, a counterclockwise direction or a clockwise direction) during a deicing operation and a compression operation, such that the deicing operation and the compression operation may be easily performed.

In some implementations, since the tray is formed of a material having high thermal conductivity, for example, a metal material, cooling of the tray may be rapidly performed by supplied cold air.

In some implementations, since a first peripheral surface, which is a part of the peripheral surfaces of the tray, forms a space or surface for ice-making and a second peripheral surface, which is another part of the peripheral surfaces, does not form a space or surface for ice-making, ice-making performance in the tray may be improved.

In some implementations, a first circumferential surface of the tray forms a first radial distance from a center of the tray such that the first circumferential surface may be immersed in or contacted with water of a reservoir, and a second circumferential surface of the tray forms a second radial distance less than the first radial distance from the center of the tray such that the second circumferential surface is not immersed in or contacted with the water of the reservoir, whereby ice-making performance of the tray may be improved.

In some implementations, ice-making performance of the tray may be improved by forming at least one of a recess and a protrusion on the circumferential surface and forming a space or surface in which ice is generated on at least one of the recess and the protrusion.

In some implementations, a tray hole may be formed in the tray, and a cold air flow path may be formed through the tray hole, thereby increasing a cooling area of the tray.

In some implementations, a reservoir configured to store water may be provided, and at least a portion of the tray may be arranged to be immersed in the reservoir such that water may be smoothly supplied to the circumferential surface of the tray.

### BRIEF DESCRIPTION OF THE DRAWINGS

FIG. 1A is a front view showing an example of a refrigerator, and FIG. 1B is a view showing an example state in which one door of the refrigerator is separated.
FIG. 2A is a perspective view viewed from a front of a first refrigerating space door, and FIG. 2B is a perspective view viewed from a rear of the first refrigerating space door.
FIG. 3A is a view showing an example state in which a basket and a filter are separated from the first refrigerating space door, and FIG. 3B is a view showing an example state in which an ice-making space door and a cover member are separated from the first refrigerating space door.
FIG. 4 is a view illustrating an example configuration of an ice maker and a door duct.
FIG. 5 is an exploded perspective view illustrating an example configuration of an ice maker and an ice-making space bracket.
FIG. 6 is a front perspective view illustrating an example configuration of the ice maker.
FIG. 7 is a rear perspective view illustrating an example configuration of the ice maker.
FIG. 8 is an exploded perspective view illustrating an example configuration of an ice-making part of the ice maker.
FIG. 9A is a view illustrating a relative arrangement with a reservoir when a tray assembly is in a first position (an ice-making position).
FIG. 9B is a view illustrating a relative arrangement with a blade when the tray assembly is in a second position (a deicing position).
FIG. 9C is a view illustrating a relative arrangement with the reservoir when the tray assembly is in a third position (a water supply position).
FIG. 10 is an exploded perspective view illustrating an example configuration of a compression part of the ice maker.
FIG. 11 is a perspective view illustrating an example configuration of a transfer pipe and a cylinder.
FIG. 12 is a cross-sectional view taken along line 12-12 of FIG. 11.
FIG. 13 is a front view illustrating a partial configuration of the compression part.
FIG. 14 is a front perspective view illustrating an example configuration of a gear assembly and a piston.
FIG. 15 is a rear perspective view illustrating an example configuration of the gear assembly and the piston.
FIG. 16A is a view illustrating an example state in which a first gear rotates in a first direction and a gear lever begins to contact an interference protrusion.
FIG. 16B is a view illustrating an example state in which the first gear rotates in the first direction and the gear lever rides over the interference protrusion.
FIG. 16C is a view illustrating an example state in which the first gear rotates in a second direction and engages with a second gear, and a piston moves toward a cylinder.
FIG. 16D is a view illustrating an example state in which the first gear rotates in the first direction and engages with the second gear, and the piston moves in a direction away from the cylinder.
FIG. 17A is a cross-sectional view illustrating an example state in which the piston is located at a standby position.
FIG. 17B is a cross-sectional view illustrating an example state in which the piston is located at a compression position.
FIG. 18A is a view illustrating an example state of the ice maker when deicing is performed at the tray.
FIG. 18B is a view illustrating an example state of the ice maker when ice is compressed by the piston.
FIG. 19 is a front-left perspective view illustrating an example configuration of an ice maker.
FIG. 20 is a front-right perspective view illustrating an example configuration of the ice maker.
FIG. 21 is a rear perspective view illustrating an example configuration of the ice maker.
FIG. 22 is an exploded view illustrating an example configuration of the ice maker.
FIG. 23 is a front view illustrating a partial configuration of the ice maker.
FIG. 24 is a view illustrating an example configuration of a gear assembly and a piston.
FIG. 25 is a front view illustrating an example configuration of the gear assembly.
FIGS. 26A to 26D are views illustrating an operation of the gear assembly.
FIG. 27A is a view illustrating an example state when deicing occurs at the tray.
FIG. 27B is a view illustrating a compression operation of the piston.

### DETAILED DESCRIPTION

Hereinafter, some implementations of the present disclosure will be described in detail through example drawings. In adding reference numerals to components in each drawing, it should be noted that the same components are given the same numerals as much as possible even if displayed on different drawings. In addition, in describing implementations of the present disclosure, if it is determined that a detailed description of a related known configuration or function interferes with understanding of the implementations of the present disclosure, the detailed description thereof will be omitted.

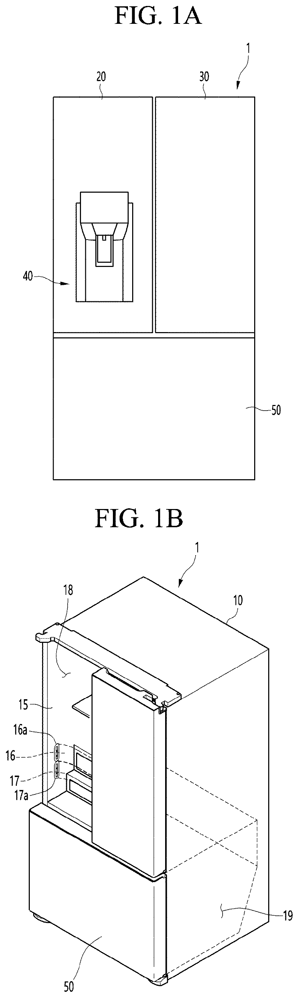

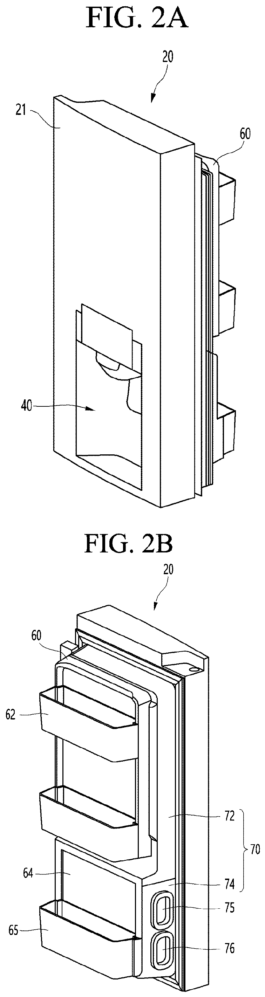

FIG. 1A is a front view of a refrigerator, FIG. 1B is a view showing an example state in which one door of the refrigerator is separated, FIG. 2A is a perspective view viewed from a front of a first refrigerating space door, and FIG. 2B is a perspective view viewed from a rear of the first refrigerating space door.

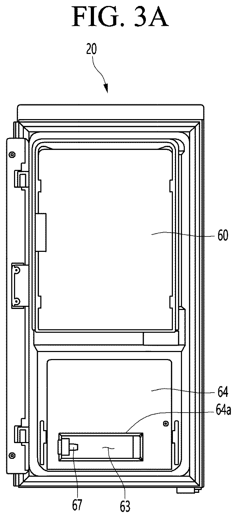

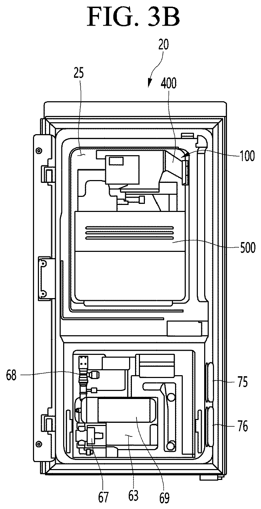

FIG. 3A is a view showing an example state in which a basket and a filter are separated from the first refrigerating space door, and FIG. 3B is a view showing an example state in which an ice-making space door and a cover member are separated from the first refrigerating space door.

Referring to FIGS. 1A to 3B, in some implementations, a refrigerator 1 may include a cabinet 10. The cabinet 10 may include a storage space. The refrigerator 1 may further include a door opening and closing the storage space. The door may be rotatably or movably connected to the cabinet 10.

The storage space may include a refrigerating space 18. The storage space may selectively or additionally include a freezing space 19. For example, FIG. 1B illustrates that the storage space includes the refrigerating space 18 and the freezing space 19. The refrigerating space 18 and the freezing space 19 may be partitioned by a partition wall.

The door may include refrigerating space doors 20 and 30 opening and closing the refrigerating space 18. The refrigerating space 18 may be opened and closed by one or more refrigerating space doors 20 and 30. The door may include a freezing space door 50 opening and closing the freezing space 19. The freezing space 19 may be opened and closed by one or more freezing space doors 50.

Hereinafter, an example in which the refrigerating space 18 is opened and closed by a first refrigerating space door 20 and a second refrigerating space door 30 will be described.

At least one of the first refrigerating space door 20 and the second refrigerating space door 30 may include a dispenser 40 for discharging water and/or ice. In some examples, depending on a type of refrigerator, it is also possible that the freezing space door 50 includes the dispenser 40.

At least one of the first refrigerating space door 20 and the second refrigerating space door 30 may include one or more ice makers 100.

Hereinafter, an example in which the ice maker 100 is provided in the first refrigerating space door 20 will be described. In some examples, it is also possible that an ice maker is provided in the second refrigerating space door 30 or the freezing space door 50. In this case, the dispenser 40 and the ice maker may be provided in the same door. Alternatively, an additional ice maker may also be provided in the refrigerating space 18 or the freezing space 19.

FIG. 1B illustratively shows that the refrigerator 1 is a bottom freezer type refrigerator. In some examples, the idea of the present disclosure may be equally applied to a side-by-side type refrigerator or a top-mount type refrigerator. In the case of the side-by-side type or the top-mount type refrigerator, a freezing space door may include an ice maker and a dispenser, or a refrigerating space door may include an ice maker and a dispenser.

The dispenser 40 may be located on a front surface of the first refrigerating space door 20. A part of the dispenser 40 is recessed rearward to provide a space in which a container may be located.

The dispenser 40 may discharge ice generated by the ice maker 100. At least a part of the ice maker 100 may be positioned higher than the dispenser 40.

The first refrigerating space door 20 may include an outer case 21. The outer case 21 may form a front appearance. The first refrigerating space door 20 may include a door liner 70. The door liner 70 may be directly or indirectly connected to the outer case 21. The door liner 70 may open and close the refrigerating space 18.

In a state in which the outer case 21 and the door liner 70 are connected, an insulating space may be formed between the outer case 21 and the door liner 70. An insulating material may be provided in the insulating space. The insulating material may be formed by curing a foaming liquid injected from the outside. Alternatively, a vacuum insulating body may be provided in the insulating space. It is also possible that the insulating material and the vacuum insulating body are provided together in the insulating space.

The refrigerator 1 may include an ice-making space 25 providing a space in which ice is generated. The ice-making space 25 may, for example, be provided in the first refrigerating space door 20. The ice maker 100 may be located in the ice-making space 25. For example, the door liner 70 may form the ice-making space 25. The ice-making space 25 may be formed as one surface of the door liner 70 is recessed toward the outer case 21.

The first refrigerating space door 20 may further include an ice bin 500 in which ice generated by the ice maker 100 is stored. The ice stored in the ice bin 500 may be discharged to the dispenser 40. The ice bin 500 may be accommodated in the ice-making space 25 together with the ice maker 100. The ice bin 500 may be located below the ice maker 100.

For example, cold air (cooled air) may be generated by a cooler and be supplied to the ice-making space 25. That is, the cooler may be configured to supply cold air to the ice-making space 25. Alternatively, the cooler may be configured to operate to supply cold air to the ice-making space 25. In this manner, the ice-making space 25 may be cooled by an indirect cooling method using cold air. In some examples, the ice-making space 25 may be cooled by a direct cooling method, e.g., using a refrigerant pipe. In some examples, an ice-making body may be disposed in the ice-making space 25 and configured to receive water, where the ice-making body can be cooled directly or indirectly by a cooling medium such as refrigerant or cooled air. For instance, the cooling medium may contact the ice-making body and be configured to transfer heat from the ice-making body to thereby freeze water received in the ice-making body into ice.

The cooler may be configured to cool the ice-making space 25 by including at least one of a refrigerant cycle and a thermoelectric element. For example, cold air for cooling of the freezing space 19 may be supplied to the ice-making space 25.

The refrigerator 1 may further include a supply flow path 16 guiding cold air of the freezing space 19 or cold air of a space in which an evaporator generating cold air for cooling of the freezing space 19 is located, to the first refrigerating space door 20. The refrigerator 1 may include a discharge flow path 17 guiding cold air discharged from the first refrigerating space door 20 to the freezing space 19 or the space in which the evaporator is located. The supply flow path 16 and the discharge flow path 17 may be provided in the cabinet 10. Cold air circulating through the supply flow path 16 and the discharge flow path 17 may flow by a fan, for example, disposed in the freezing space 19 or the space in which the evaporator is located.

A first opening 16a forming an end portion of the supply flow path 16 may be formed in an inner wall of the refrigerating space 18. Cold air of the supply flow path 16 may be discharged from the supply flow path 16 through the first opening 16a. A second opening 17a forming an end portion of the discharge flow path 17 may be formed in the inner wall of the refrigerating space 18. Cold air of the supply flow path 16 may flow into the discharge flow path 17 through the second opening 17a. The first opening 16a and the second opening 17a may be formed in one inner wall among a plurality of inner walls of the refrigerating space 18.

The first refrigerating space door 20 may include a cold-air inlet 75. When the first refrigerating space door 20 is closed, the cold-air inlet 75 may communicate with the supply flow path 16 through the first opening 16a. The first refrigerating space door 20 may include a cold-air outlet 76. When the first refrigerating space door 20 is closed, the cold-air outlet 76 may communicate with the discharge flow path 17 through the second opening 17a.

The cold-air inlet 75 may be formed on one side surface of the door liner 70. Although not limited, the one side surface of the door liner 70 is a surface facing an inner wall of the refrigerating space 18 in which the supply flow path 16 is located when the first refrigerating space door 20 is closed. The cold-air outlet 76 may be formed on the one side surface of the door liner 70. Although not limited, the one side surface of the door liner 70 is a surface facing an inner wall of the refrigerating space 18 in which the discharge flow path 17 is located when the first refrigerating space door 20 is closed.

The one side surface of the door liner 70 may include a first side surface portion 72 and a second side surface portion 74 having different widths in a front-rear direction. A width in the front-rear direction of the second side surface portion 74 may be formed greater than a width of the first side surface portion 72. At least one of the cold-air inlet 75 and the cold-air outlet 76 may be formed in the second side surface portion 74 of the door liner 70. The second side surface portion 74 may protrude further toward the refrigerating space 18 than the first side surface portion 72.

The first refrigerating space door 20 may include an ice-making space door 60 opening and closing the ice-making space 25. The ice-making space door 60 may be an insulating door in which an insulating material is provided inside. The ice-making space door 60 may be rotatably connected to the first refrigerating space door 20 by a hinge.

A first basket 62 capable of storing food may be provided in the ice-making space door 60. It is possible that a second basket 65 is provided in the first refrigerating space door 20. For example, the second basket 65 may be located below the first basket 62. A length in the front-rear direction of the second basket 65 may be shorter than a length in the front-rear direction of the first basket 62. The second basket 65 may overlap the dispenser 40 in the front-rear direction.

A component space 63 accommodating components may be formed in the first refrigerating space door 20. In the component space 63, at least one of a valve 68 adjusting flow of water, a filter, and a water tank 69 storing water may be accommodated. The component space 63 may be formed by the door liner 70. Alternatively, the component space 63 may be formed by a separate wall connected to the door liner 70. The first refrigerating space door 20 may include a cover member 64 covering the component space 63. A holder 67 to which the filter is coupled may be provided in the component space 63.

The cover member 64 may include an opening 64a. Through the opening 64a, the filter may be coupled to the holder 67. The second basket 65 may cover the opening 64a. When the second basket 65 is separated, the opening 64a may be exposed. The holder 67 may be exposed through the opening 64a.

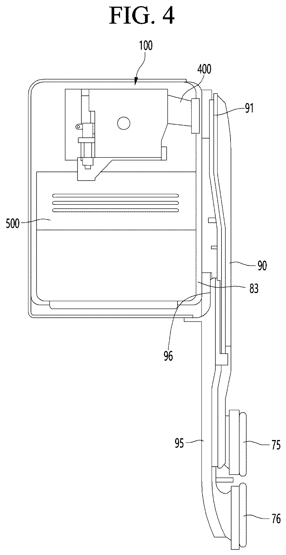

FIG. 4 is a view illustrating an example configuration of an ice maker and a door duct.

Referring to FIGS. 3A, 3B, and 4, in some implementations, a refrigerating space door 20 may include an ice-making space 25 accommodating an ice maker 100. The refrigerating space door 20 may include a plurality of walls 80 defining the ice-making space 25.

The plurality of walls may constitute at least a part of the door liner 70.

The plurality of walls may include a lower wall 80a defining a lower portion of the ice-making space 25, an upper wall 80b defining an upper portion of the ice-making space 25, and two side walls 81 defining both side portions of the ice-making space 25. The plurality of walls may further include a front wall 80c defining a front surface of the ice-making space 25.

The lower wall 80a may include a take-out portion 84 for taking out ice stored in the ice bin 500 to the dispenser 40.

The ice maker 100 may be located between the upper wall 80b and the ice bin 500. For example, the ice maker 100 may be disposed adjacent to the upper wall 80b.

A first duct 90 connected to the cold-air inlet 75 to supply cold air to the ice-making space 25 may be provided in the side wall 81. For example, the first duct 90 is embedded in the side wall 81 and may not be exposed to the ice-making space 25. The first duct 90 may extend upward from the cold-air inlet 75 to an upper portion of the refrigerating space door 20 in which the ice maker 100 is located. The first duct 90 can be referred to as a door duct.

The first duct 90 includes a duct discharge portion 91 discharging cold air, and cold air discharged from the duct discharge portion 91 may flow into a cold-air duct 400 of the ice maker 100.

A supply portion 82 guiding cold air to the cold-air duct 400 may be formed in the side wall 81. The duct discharge portion 91 is connected to the supply portion 82, and the cold-air duct 400 may be connected to the duct discharge portion 91 through the supply portion 82.

A return portion 83 for sending cold air of the ice-making space 25 to the cold-air outlet 76 may be formed in the side wall 81. For example, the return portion 83 may be formed at a height at which the ice bin 500 is located.

A second duct 95 may be connected to the return portion 83. The second duct 95 may include a duct inlet portion 96 introducing cold air discharged through the return portion 83. The duct inlet portion 96 may be directly or indirectly connected to the return portion 83. For example, the second duct 95 is embedded in the side wall 81 and may not be exposed to the ice-making space 25. The second duct 95 extends downward from the return portion 83 to a lower portion of the refrigerating space door 20, and may be connected to the cold-air outlet 76.

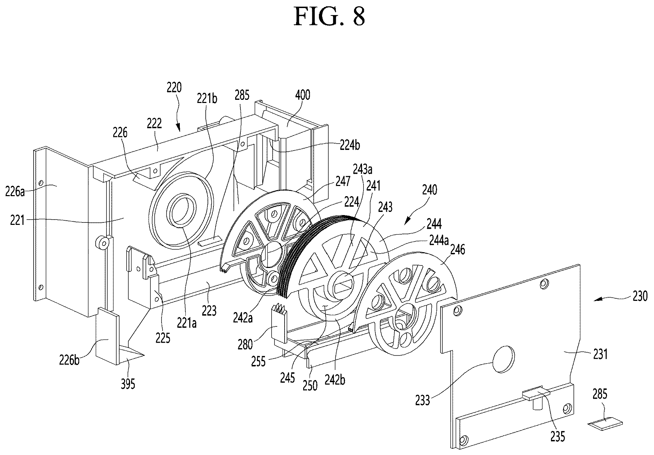

The ice maker 100 may include an ice-making part 200 (see FIG. 8) performing an operation of receiving water, cooling the water in a tray assembly 240 (see FIG. 8), and de-icing cooled ice.

The ice maker 100 may include a compression part 300 (see FIG. 8) configured to transfer ice de-iced from the tray assembly 240 and recombine or compress transferred ice to manufacture ice in the third state. The ice in the third state may be ice having a predetermined thickness. The ice in the third state may have, for example, a cylindrical or polygonal column shape corresponding to an inner surface shape of a cylinder 380 or a discharge pipe 390 to be described later. In some examples, the compression part 300 may be referred to as an ice-compressing assembly or ice-compression assembly.

The ice maker 100 may include a cold-air duct 400 supplying cold air to the ice-making part 200. The cold-air duct 400 may be understood as being disposed between the side wall 81 and the tray assembly 240 to be described later.

Hereinafter, a detailed configuration of the ice maker 100 will be described with reference to drawings.

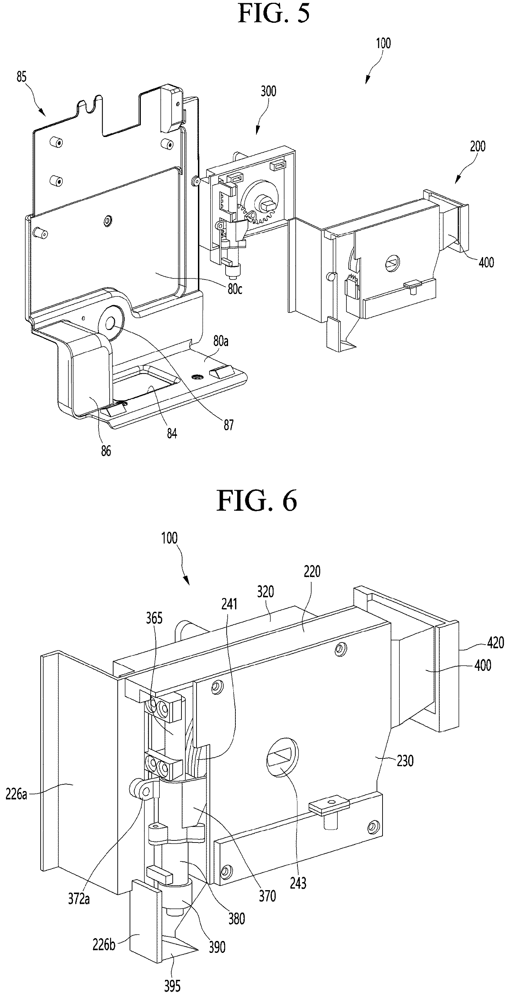

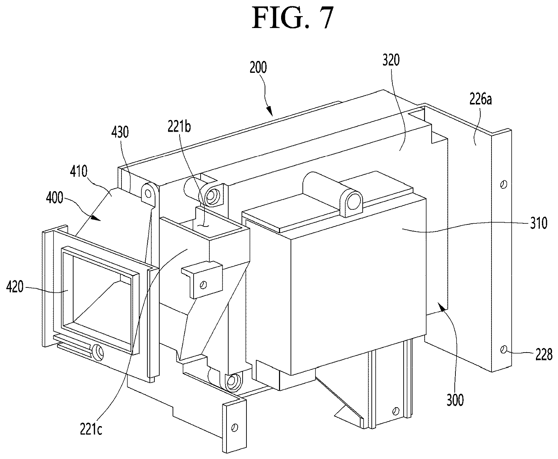

FIG. 5 is an exploded perspective view illustrating an example configuration of an ice maker and an ice-making space bracket, FIG. 6 is a front perspective view illustrating an example configuration of the ice maker, FIG. 7 is a rear perspective view illustrating an example configuration of the ice maker, and FIG. 8 is an exploded perspective view illustrating an example configuration of an ice-making part of the ice maker.

Referring to FIGS. 5 to 8, an ice maker 100 may be installed in the ice-making space 25 of the refrigerating space door 20. The refrigerating space door 20 may include an ice-making space plate 85 forming at least a part of the wall 80 of the ice-making space 25. The ice-making space plate 85 may include the lower wall 80a and the front wall 80c.

The ice maker 100 may be supported by the front wall 80c of the ice-making space 25.

The ice maker 100 is supported on an upper portion of the front wall 80c, and the ice bin 500 may be located below the ice maker 100. The refrigerating space door 20 may include a take-out motor to provide driving force to discharge ice stored in the ice bin 500 to the dispenser 40.

The wall 80 of the ice-making space 25 may include a motor accommodating portion 86 surrounding the take-out motor. The take-out motor is connected to a gear assembly located in front of the front wall 80c, and when the gear assembly operates by driving of the take-out motor, an auger of the ice bin 500 operates so that ice may be taken out. The front wall 80c may include a through portion 87 through which a shaft connecting the gear assembly and the ice bin 500 passes. Ice discharged from the ice bin 500 may be discharged to the dispenser 40 through the take-out portion 84 of the lower wall 80a.

The ice maker 100 may include an ice-making part 200 including a tray assembly (240).

The ice-making part 200 may include ice-making brackets 220 and 230 forming a cold-air flow path. A cold-air duct 400 is connected to one side of the ice-making brackets 220 and 230, and cold air supplied through the cold-air duct 400 may flow through a cold-air flow path formed inside the ice-making brackets 220 and 230. The cold-air duct 400 may be defined as a "first cold-air duct", and the ice-making brackets 220 and 230 may also be defined as a "second cold-air duct".

The ice-making brackets 220 and 230 may include a first bracket 220 forming an accommodating space of the tray assembly 240. The cold-air duct 400 is connected to the first bracket 220, and cold air supplied through the cold-air duct 400 may flow into the accommodating space.

The cold-air duct 400 may include a duct body 410 extending from the side wall 81 toward the ice-making bracket 220, 230, an inlet portion 420 formed at one end of the duct body 410 and connected to a supply portion 82 of the side wall 81, and an outlet portion 430 formed at the other end of the duct body 410 and connected to the ice-making bracket 220, 230 to discharge cold air.

The ice-making brackets 220 and 230 may include a second bracket 230 connected to the first bracket 220 and forming a cold-air flow path together with the first bracket 220. For example, one side portion of the first bracket 220 is opened, and the opened one side portion may be covered by the second bracket 230 so that a cold-air flow path may be formed therein.

The internal space of the first bracket 220 and the second bracket 230 may form an accommodation space in which the tray assembly 240 is accommodated.

The ice-making part 200 may include a reservoir 250 storing water. The reservoir 250 may supply water to the tray assembly 240.

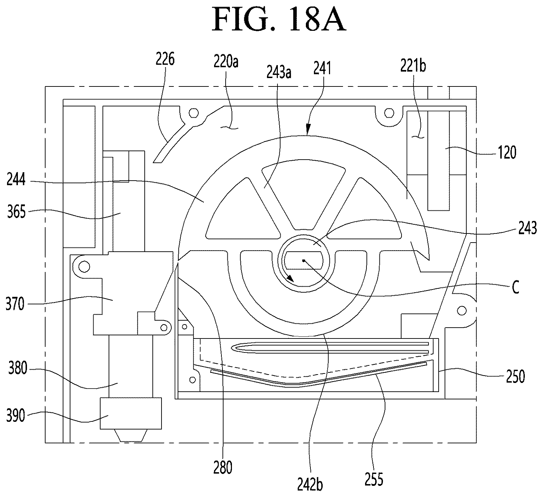

The first bracket 220 may include a supply pipe bracket 221c configured to guide a water supply pipe 120 (see FIG. 18A) for supplying water to the reservoir 250. The supply pipe bracket 221c may protrude from the first wall 221 of the first bracket 220.

The supply pipe bracket 221c may include a pipe communication portion 221b into which the water supply pipe 120 is inserted, and at least a portion of the water supply pipe 120 may extend into the interior of the ice-making bracket 220 and 230 through the pipe communication portion 221b.

The ice maker 100 may include a motor 310 configured to provide driving force to move the tray assembly 240.

The tray assembly 240 may include a tray 241 configured to perform ice making by receiving water. The tray 241 may be provided to be movable by receiving power from the motor 310. For example, the tray 241 may be provided to be rotatable.

The tray 241 may include peripheral surfaces 242a and 242b forming a water storage space. The peripheral surfaces 242a and 242b may be understood as including a cell for ice generation.

For example, the tray 241 may have a drum shape having a peripheral surface. The peripheral surface may form an outer circumferential surface of the drum. That is, the peripheral surfaces 242a and 242b may be understood as extending in a circumferential direction to form the outer circumferential surface of the tray 241.

In another aspect, the tray 241 may have a disk shape or a plate shape including both side walls and a peripheral surface. In some examples, the tray 241 may be referred to as an ice-making body or a rotating body having a disk shape, a plate shape, a fan shape, an arc shape, a cylindrical shape, etc.

The peripheral surfaces 242a and 242b may include a first peripheral surface 242a on which water is supplied. The first peripheral surface 242a may form at least a part of the outer circumferential surface of the tray 241. When the first peripheral surface 242a is at a position facing the reservoir 250, the first peripheral surface 242a may include a surface contacting water stored in the reservoir 250. In some examples, the first peripheral surface 242a may be referred to as a circumferential portion or a peripheral portion of the ice-making body (e.g., tray 241) configured to receiver water.

The first peripheral surface 242a may be disposed adjacent to the first blade 280 so that ice generated on the first peripheral surface 242a contacts the first blade 280.

The first peripheral surface 242a may include at least one of a first part defining a recessed portion and a second part defining a protruding portion so as to increase a contact area of water cooling area. The first part may include a recess 241a, and the second part may include a protrusion 241b.

When a recessed portion of the first peripheral surface 242a is viewed as a reference position, it may be understood that the first peripheral surface 242a includes the protrusion 241b, and when a protruding portion of the first peripheral surface 242a is viewed as a reference position, it may be understood that the first peripheral surface 242a includes the recess 241a.

Due to configurations of the recess 241a and the protrusion 241b, the first peripheral surface 242a may be understood as including an uneven structure.

A plurality of recesses 241a and a plurality of protrusions 241b may each be provided. The plurality of recesses 241a and the plurality of protrusions 241b may have a structure in which they are alternately arranged. The recesses 241a may be recessed relative to the protrusions 241b. In some examples, the recesses 241a are defined at the peripheral surfaces 242a such that the protrusions 241b are formed between the recesses 241a. In some examples, the protrusions 241b are disposed at the peripheral surfaces 242a such that the recesses 241a are formed between the protrusions 241b.

The circumferential surface 242a, 242b may include a second circumferential surface 242b connected to the first circumferential surface 242a and to which water is not supplied. The second circumferential surface 242b may include a surface that does not contact water stored in the reservoir 250 when the second circumferential surface 242b faces the reservoir 250.

The second peripheral surface 242b may be disposed relatively far away from the first blade 280 so that ice generated on the second peripheral surface 242b does not contact the first blade 280.

A center distance (a second center distance, D2) from a center of the tray 241 to the second peripheral surface 242b, that is, a radius distance of the second peripheral surface 242b, may be formed less than a center distance (a first center distance, D1) from the center of the tray 241 to the first peripheral surface 242a, that is, a radius distance of the first peripheral surface 242a. For example, the second peripheral surface 242b may have a shape cut from an edge of the first peripheral surface 242a in a direction toward the center of the tray 241.

When the first peripheral surface 242a is at a position to be frozen by contacting cold air, the second peripheral surface 242b is disposed to face the reservoir 250. At this time, since the second peripheral surface 242b does not contact water of the reservoir 250, the reservoir 250 may not be cooled by the tray 241 forming a low temperature. Accordingly, freezing of water stored in the reservoir 250 may be prevented.

The tray 241 may include side walls 244 also referred to as side surfaces. The side wall 244 may include a portion extending in a radial direction of the tray 241. A plurality of side walls 244, for example, two side walls 244, may be provided to form both side surfaces of the tray 241.

The tray 241 may include an inner circumferential wall 244a connected to the side wall 244. The inner circumferential wall 244a is understood to form an inner circumferential surface of the tray 241, and may include a surface opposite to the peripheral surfaces 242a and 242b with respect to the side wall 244.

The tray 241 may include a center bracket 243 forming a central portion (or a central shaft) of the tray 241. The center bracket 243 may protrude toward both sides in an axial direction of the tray 241.

The center bracket 243 may be coupled to a first gear 330 of the compression part 300. For example, the center bracket 243 may include an insertion hole 2431 into which a central bracket 331 of the first gear 330 is inserted.

The tray 241 may include extension walls 243a extending from the center bracket 243 toward the side walls 244. The extension wall 243a may, for example, extend in a radial direction from the center bracket 243.

A plurality of extension walls 243a are provided, and the plurality of extension walls 243a may be disposed spaced apart from each other in a circumferential direction.

The side wall 244 on the side of the second circumferential surface 242b may have a semicircular shape and may be connected to an extension wall 243a on the side of the first circumferential surface 242a.

Directions will be defined. Throughout the specification, an "axial direction" may refer to a direction in which a shaft of the motor 310 extends, and a "radial direction" may refer to a direction of a radius crossing the axial direction.

The tray 241 may form tray holes 245 (tray openings). The tray hole 245 may be understood as a hole penetrating in the axial direction of the tray 241. Through the tray hole 245, cold air flows so that a cooling area of the tray 241 may increase.

The tray hole 245 may be understood as a space defined by the center bracket 243, the plurality of extension walls 243a, and the inner circumferential wall 244a. A plurality of tray holes 245 are formed, and the plurality of tray holes 245 may be disposed in a circumferential direction of the tray 241.

The tray assembly 240 may include tray covers 246 and 247 connected to the tray 241. The tray covers 246 and 247 may be provided on both side walls 244 of the tray 241.

The tray covers 246 and 247 are disposed to cover at least one side of the tray 241 and may function to prevent water of the reservoir 250 from flowing into the tray holes 245 of the tray 241.

The tray covers 246 and 247 may be made of a material having low thermal conductivity so that generation of ice is limited. For example, the material having low thermal conductivity may include a non-metal material. A plastic material may be proposed as an example of the non-metal material.

The tray cover 246 and 247 may include a first tray cover 246 provided on one side wall 244 of the tray 241 and a second tray cover 247 provided on the other side wall 244 of the tray 241.

The first and second tray covers 246 and 247 may have shapes corresponding to a shape of the tray 241. For example, each of the first and second tray covers 246 and 247 may include portions configured to cover the side wall 244, the plurality of extension walls 243a and the inner circumferential wall 244a of the tray 241.

Each of the first and second tray covers 246 and 247 may include a cover through-hole portion corresponding to the tray hole 245 of the tray 241. Cold air may pass through the cover through-hole portions of the first and second tray covers 246 and 247 and the tray hole 245 of the tray 241.

In another aspect, the first tray cover 246 and the second tray cover 247 may be understood as one component of a "tray" in a broad sense. In this case, the tray assembly 240 may be referred to as a "tray", the tray 241 may be referred to as a "tray part", and the first and second tray covers 246 and 247 may constitute a part of the tray.

In some implementations, the first and second tray covers 246 and 247 may not be provided, and the tray assembly 240 may be configured to include only the tray 241.

The ice-making part 200 may include the first bracket 220 forming a first accommodating space 220a for the tray assembly 240.

The first bracket 220 may include a first wall 221 supported by the ice-making space plate 85. The first wall 221 may be understood as a wall shielding at least a portion of one side surface of the tray assembly 240.

In another aspect, the first wall 221 may be disposed to support the tray 241. The first wall 221 may include an insertion hole 221a into which at least a portion of the tray 241 is inserted to support the tray 241. For example, the center bracket 243 of the tray 241 may be rotatably inserted into the insertion hole 221a, and be coupled to the first gear 330 of the compression part 300.

The first bracket 220 may include a rotation guide rib 221d provided on the first wall 221 and disposed to surround the insertion hole 221a. The rotation guide rib 221d may be formed in a circumferential direction and may protrude from the first wall 221 toward the tray assembly 240.

At least a portion of the tray assembly 240 may be supported by the rotation guide rib 221d. For example, the second tray cover 247 may include a protruding rib protruding toward the first wall 221. The protruding rib may have a shape corresponding to that of the rotation guide rib 221d, and when the tray assembly 240 rotates, the protruding rib may be rotatably supported on an inner circumferential surface of the rotation guide rib 221d.

The first wall 221 may form at least a portion of a wall guiding flow of cold air introduced through the cold-air duct 400.

The ice-making part 200 may include a second wall 222 connected to the first wall 221. The second wall 222 is connected to an end portion of the first wall 221, for example, an upper end portion, and may protrude in a direction toward the second bracket 230. The second wall 222 may form an upper end portion of the ice-making part 200.

The ice-making part 200 may include a third wall 223 connected to the first wall 221. The third wall 223 is connected to an end portion of the first wall 221, for example, a lower end portion, and may protrude in a direction toward the second bracket 230. The third wall 223 may form a lower end portion of the ice-making part 200.

The ice-making part 200 may include a fourth wall 224 and a fifth wall 225 connected to the third wall 223. The fourth wall 224 is connected to one side of the third wall 223, and the fifth wall 225 may be connected to the other side of the third wall 223. For example, the fourth wall 224 and the fifth wall 225 may protrude at both ends of the third wall 223. In some examples, any one of the first to fifth walls that contacts the reservoir may be referred to as a supporting wall. For example, the third wall 223 may be a supporting wall that supports a bottom of the reservoir 250, and the fourth wall 224 and the fifth wall 225 may be extending walls protruding from the supporting wall.

The ice-making part 200 may include a second accommodating space in which the reservoir 250 is placed. The second accommodating space may be understood as a space defined by the third wall 223, the fourth wall 224, and the fifth wall 225. The second accommodating space may be formed below the first accommodating space.

The reservoir 250 may include a case having a predetermined capacity, and a heater 255 provided in a wall of the case and providing heat so that water stored in the reservoir 250 is not frozen. The heater 255 may be named a "reservoir heater". Water discharged from the water supply pipe 120 may flow at a low speed along an inclined surface of the fourth wall 224 and may be introduced into the reservoir 250.

The ice-making part 200 may include a first blade 280 contacting ice made to separate ice made in the tray 241. The first blade 280 may be located adjacent to a rotation path of the tray 241. In particular, the first blade 280 may be located adjacent to the first peripheral surface 242a when the tray 241 rotates.

The first blade 280 may be provided in the fifth wall 225. For example, the reservoir 250 is disposed on an inner surface of the fifth wall 225, and the first blade 280 may be coupled to an outer surface of the fifth wall 225.

The ice-making part 200 may include a second blade 285 contacting frozen ice to separate frozen ice from the tray assembly 240.

The second blade 285 may be located adjacent to both side walls of the tray assembly 240 so as to scrape frozen ice on both side walls, that is, the first cover wall 246a and the second cover wall 247a.

A plurality of second blades 285 may be provided, and one second blade 285 may be provided in the first wall 221. Another second blade 285 may be provided in a wall of the bracket wall 231 of the second bracket 230.

While the tray assembly 240 rotates, frozen ice contacting the second blade 285 is separated from the tray assembly 240, and the separated ice may flow into the reservoir 250.

A cold-air flow path through which cold air introduced from the cold-air duct 400 flows may be formed inside the first bracket 220. At least a portion of the cold-air flow path may be formed in the first accommodating space 220a.

The first bracket 220 may include a first opening 224b to which the cold-air duct 400 is coupled and which forms a cold-air inlet portion. The first opening 224b may be formed in a fourth wall 224 of the first bracket 220.

The first opening 224b and the reservoir 250 may be located opposite to each other based on the center of the tray 241. For example, the first opening 224b may be formed at a position higher than the center of the tray 241, and the reservoir 250 may be disposed at a position lower than the center of the tray 241. With such a configuration, it may be possible to prevent cold air introduced through the first opening 224b from directly flowing into the reservoir 250.

The ice-making part 200 may include a guide wall 226 disposed to guide cold air to the peripheral surfaces 242a and 242b of the tray 241. The guide wall 226 is provided in the first wall 221 and may be formed to be rounded corresponding to a curvature of the peripheral surfaces 242a and 242b.

A first portion of the guide wall 226 may be connected to the first wall 221, and a second portion may be connected to the second wall 222.

The guide wall 226 and the first opening 224b may be located opposite to each other based on the center of the tray 241. Accordingly, since air supplied to an outer circumferential surface peripheral surface of the tray 241 through the first opening 224b is guided by the guide wall 226 located opposite to the first opening 224b, it may be possible to easily form cold-air flow path along the outer circumferential surface peripheral surface of the tray 241.

The first bracket 220 may include a sixth wall 226a protruding from the first wall 221 toward the ice-making plate 85, that is, toward a front side of the refrigerator. The sixth wall 226a may support a lateral side of the motor 310 installed on a rear surface of the first wall 221. The rear surface of the first wall 221 may be understood as a surface opposite to a surface on which the tray assembly 240 is installed.

The sixth wall 226a may include a fastening hole 228 coupled to the ice-making plate 85, and a fastening member may pass through the fastening hole 228 and be fastened to the ice-making plate 85.

The first bracket 220 may include a seventh wall 226b extending downward from the first wall 221 and configured to support a cutter wall 395. The cutter wall 395 is a component configured to cut ice discharged from the cylinder 380, and ice cut by the cutter wall 395 may fall into an ice bin 500. The cutter wall 395 may be disposed below the cylinder 380.

The second bracket 230 may include a bracket wall 231 configured to cover an open side of the first bracket 220. The bracket wall 231 may form at least one surface of a cold air flow path formed inside the ice-making bracket 220 and 230.

The bracket wall 231 may include a through portion 233 configured to support the center bracket 243 of the tray assembly 240. That is, among the center bracket 243, a first portion protruding toward the compression part 300 may be coupled to the first gear 330 of the compression part 300, and a second portion protruding toward the second bracket 230 may be inserted into and supported by the through portion 233.

The second bracket 230 may include a blade bracket 235 disposed on the bracket wall 231 and on which a second blade 285 is mounted. The blade bracket 235 may be disposed through the bracket wall 231, and the second blade 285 may be mounted on the blade bracket 235 to protrude toward a side wall of the tray assembly 240, for example, toward the first tray cover 246.

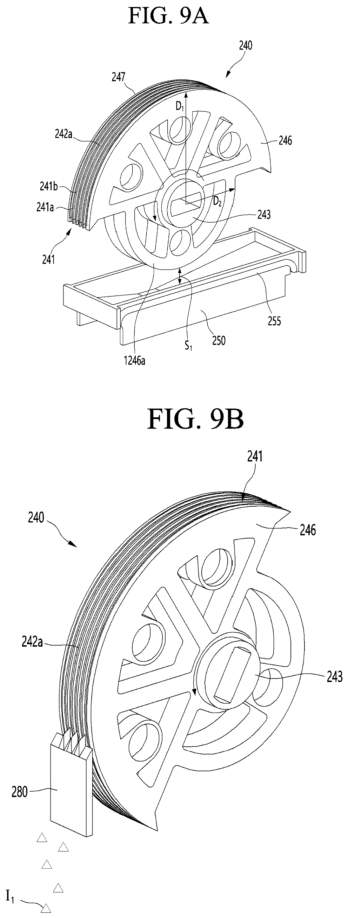

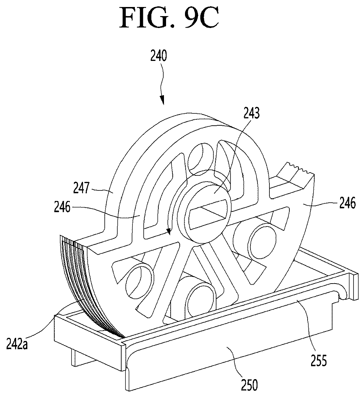

FIG. 9A is a view illustrating a relative arrangement with a reservoir when a tray assembly is in a first position (an ice-making position), FIG. 9B is a view illustrating a relative arrangement with a blade when the tray assembly is in a second position (a deicing position), and FIG. 9C is a view illustrating a relative arrangement with the reservoir when the tray assembly is in a third position (a water supply position).

An operation of the tray assembly 240 will be described with reference to FIGS. 9A to 9C. In some implementations, referring to FIG. 9A, the tray assembly 240 may be located at the ice-making position based on driving of the motor 310. At the ice-making position, the first circumferential surface 242a of the tray 241 may not be immersed in the reservoir 250 and may be positioned at upper portions on both sides of the reservoir 250.

The second circumferential surface 242b may be spaced apart by a predetermined distance S1 from an upper end of the reservoir 250 or from a maximum water level position of the reservoir 250 such that the second circumferential surface 242b does not contact water in the reservoir 250. Accordingly, at the ice-making position, since the tray assembly 240 does not contact water in the reservoir 250, freezing of water in the reservoir 250 or transfer of ambient heat of the reservoir 250 to the tray assembly 240 may be prevented.

At the ice-making position, water supplied to the first peripheral surface 242a may be cooled by cold air supplied through the cold-air duct 400 and may undergo a phase change into thin ice. A state of ice cooled on the first peripheral surface 242a may be referred to as a first state or first state ice. The ice in the first state may be formed to a predetermined height on surfaces of a recess 241a and a protrusion 241b provided on the first peripheral surface 242a. The ice in the first state may be understood as ice having a thin layer thickness.

When a predetermined time elapses at the ice-making position, the motor 310 may be driven so that the tray assembly 240 rotates. For example, as illustrated in FIG. 9a, the tray assembly 240 may rotate counterclockwise.

During rotation of the tray assembly 240, when the first peripheral surface 242a is at a position where the first blade 280 is provided, the first blade 280 may contact ice formed on the first peripheral surface 242a. In the contact process, the ice may be separated from the first peripheral surface 242a and may be de-iced.

The de-iced ice may be introduced into the compression part 300, in particular into the transfer pipe 370. The de-iced ice may have a shape of powdered ice, and such a state of ice may be referred to as a second state or second state ice.

When the tray assembly 240 further rotates from the state shown in FIG. 9B, the first circumferential surface 242a rotates and passes through a water supply position as shown in FIG. 9C. While passing the water-supply position, water may be supplied to the first peripheral surface 242a. In some examples, the circumferential surface 242a may be referred to as a circumferential portion or a peripheral portion of the ice-making body (e.g., tray 241) configured to receiver water.

In detail, when the tray assembly 240 rotates in a counterclockwise direction from the position shown in FIG. 9A, deicing on the first circumferential surface 242a is performed at the position shown in FIG. 9B, and the first circumferential surface 242a on which deicing has been completed moves to the position shown in FIG. 9C. At this time, the first peripheral surface 242a is immersed in or contacted with water of the reservoir 250. Water that contacts the first peripheral surface 242a may remain on the first peripheral surface 242a due to surface tension.

After water is supplied to the first circumferential surface 242a, when the tray assembly 240 further rotates, the tray assembly 240 may return to the position of FIG. 9A, and the ice-making operation may be performed again.

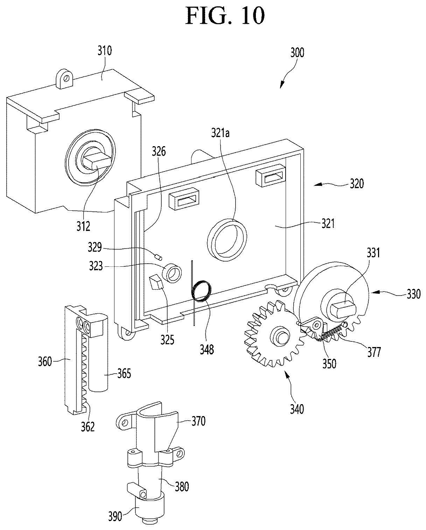

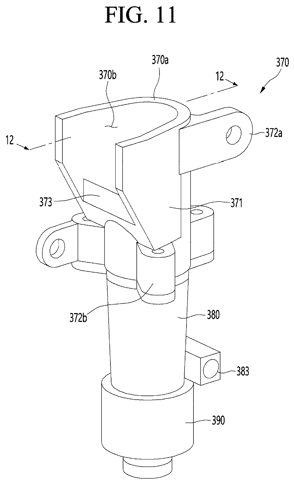

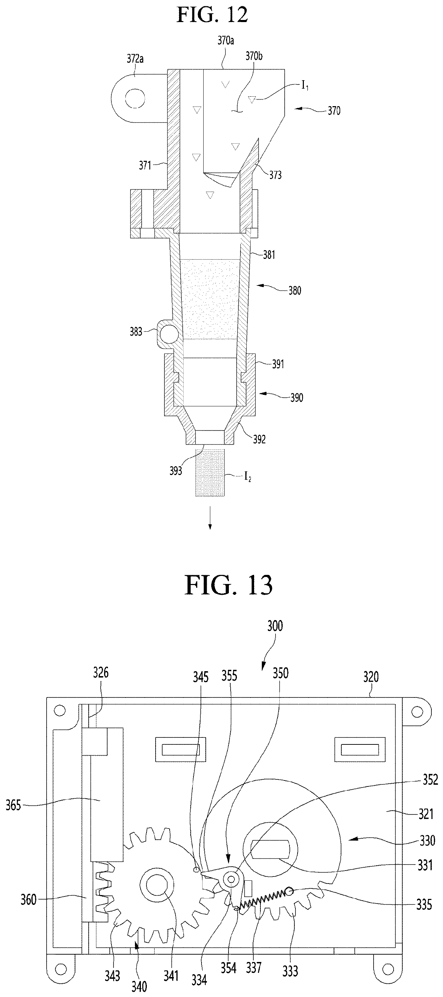

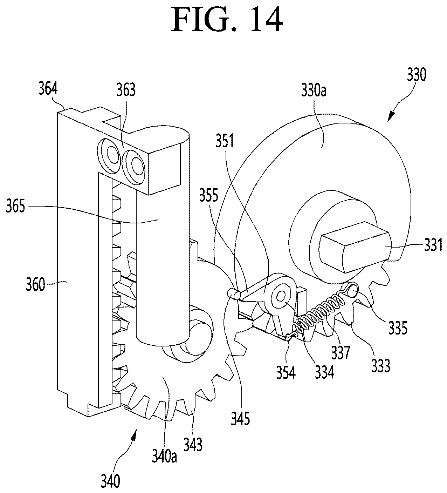

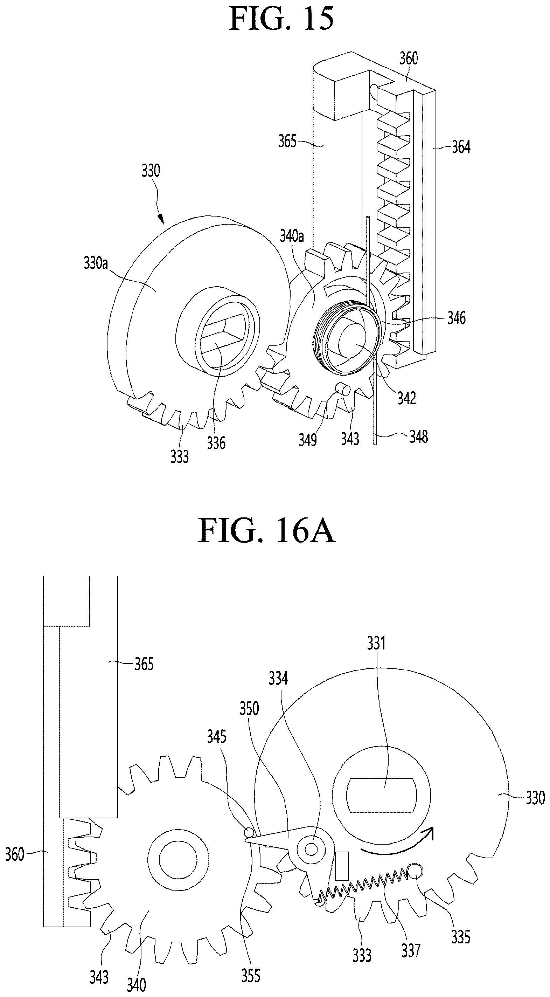

FIG. 10 is an exploded perspective view illustrating an example configuration of a compression part of the ice maker, FIG. 11 is a perspective view illustrating an example configuration of a transfer pipe and a cylinder, FIG. 12 is a cross-sectional view taken along line 12-12 of FIG. 11, FIG. 13 is a front view illustrating a partial configuration of the compression part, FIG. 14 is a front perspective view illustrating an example configuration of a gear assembly and a piston, and FIG. 15 is a rear perspective view illustrating an example configuration of the gear assembly and the piston.

Referring to FIGS. 10 to 15, the ice maker 100 may include a compression part 300 including a piston 365 configured to compress or recombine ice separated from the tray assembly 240. The piston 365 may move by driving of the motor 310.

The compression part 300 may include a first bracket 320 connected to the motor 310. The first bracket 320 may support components constituting the compression part 300 and may include an opened end. The first bracket 320 may be referred to as a gear bracket.

The opened end may be shielded by the first wall 221 of the first bracket 220 of the ice-making part 200. That is, the first bracket 320 and the first bracket 220 of the ice-making part 200 may form a space in which components of the compression part 300 are installed.

The first bracket 320 may include a first wall 321 forming a through hole 321a into which a motor shaft 312 of the motor 310 is inserted. The motor shaft 312 may be coupled to a central portion (or central shaft) of the first gear 330, that is, a central bracket 331 through the through hole 321a.

The compression part 300 may include a power transmission device for transmitting driving force of the motor 310 to the piston 365. The power transmission device may include a gear assembly.

The gear assembly may include a first gear 330 serving as a driving gear coupled to the motor shaft 312 and rotating together with the motor shaft 312. The first gear 330 may include a first gear body 330a having an outer circumferential surface forming a first gear portion 333.

The first gear 330 may include a central bracket 331 forming a central portion, and the central bracket 331 may protrude from a first surface of the first gear body 330a in a direction toward the tray assembly 240.

A shaft groove 336 to which the motor shaft 312 is coupled may be formed on a second surface of the first gear body 330a. The second surface may form a rear surface of the first surface.

The first gear 330 may include a lever protrusion 334 disposed at a position radially spaced apart from the central bracket 331. The lever protrusion 334 may protrude from the first gear 330, and a gear lever 350 may be rotatably connected to the lever protrusion 334.

The gear lever 350 may include a lever body 351 forming an insertion hole 352 into which the lever protrusion 334 is inserted. The lever body 351 may be rotatable about the lever protrusion 334.

The gear lever 350 may include a first part 354 forming a first end of the lever body 351 and a second part 355 forming a second end thereof. The first part 354 may extend in one direction from the insertion hole 352, and the second part 355 may extend in another direction from the insertion hole 352.

The first gear 330 may include an outer circumferential surface on which the first gear portion 333 is disposed. The first gear portion 333 may include a plurality of gear teeth. The first gear portion 333 may be provided only on a portion of the outer circumferential surface rather than the entire outer circumferential surface of the first gear 330. That is, the first gear portion 333 may form an incomplete gear portion. For example, the first gear portion 333 may be provided only in a region forming a central angle of about 90 degrees with respect to the center of the first gear 330.

The second part 355 may be disposed at a position radially further protruding than the gear portion 333 of the first gear 330. Accordingly, even when a portion of the first gear 330 where the gear portion is not formed rotates toward the second gear 340 and the first gear 330 and the second gear 340 are not engaged with each other, the second part 355 may contact a portion of the second gear 340, for example, an interference protrusion 345.

The compression part 300 may include a lever spring 337 connected to the gear lever 350. The lever spring 337 may be connected to the first part 354 to elastically support the gear lever 350. For example, the lever spring 337 may include a tension spring.

The first gear 330 may include a spring protrusion 335 to which the lever spring 337 is connected. The spring protrusion 335 may protrude from the first gear 330 and may be disposed at a position radially spaced apart from the central bracket 331. The spring protrusion 335 and the lever protrusion 334 may be disposed at positions spaced apart from each other in a circumferential direction.

One end of the lever spring 337 may be connected to the gear lever 350, and the other end of the lever spring 337 may be connected to the spring protrusion 335.

The gear assembly may include a second gear 340 serving as a driven gear interlocked with the first gear 330. The second gear 340 may include a second gear body 340a having an outer circumferential surface forming a second gear portion 343.

The second gear 340 may include a central bracket 342 forming a central portion (or central shaft). The central bracket 342 may be rotatably supported by a receiving bracket 323 of the first bracket 320. The receiving bracket 323 may include a receiving groove, and the central bracket 342 may be inserted into the receiving groove.

The second gear 340 may include an outer circumferential surface on which the second gear portion 343 is disposed. The second gear portion 343 may include a plurality of gear teeth. The second gear portion 343 may be provided only on a portion of the outer circumferential surface rather than the entire outer circumferential surface of the second gear 340. That is, the second gear portion 343 may form an incomplete gear portion. For example, the second gear portion 343 may be provided only in a region forming a central angle of about 270 degrees with respect to the center of the second gear 340.

The second gear 340 may include a first protrusion 349 disposed at a position radially spaced apart from the central bracket 342 and supporting one end of a gear spring 348. The first protrusion 349 may protrude from the second gear 340 toward the first bracket 320.

The gear spring 348 is a component that provides restoring force to guide rotation of the second gear 340 in one direction and may include, for example, a torsion spring.

The other end of the gear spring 348 may be supported by a second protrusion 329 of the first bracket 320. The second protrusion 329 may protrude from the first bracket 320 toward the second gear 340.

The first bracket 320 may include a stopper 325 for providing a rotation limit of the second gear 340. The stopper 325 may protrude from the first bracket 320 toward the second gear 340 and may be inserted into a guide groove 346 of the second gear 340.

The guide groove 346 may have an arc shape and may be formed in a circumferential direction with a predetermined radial distance from the central bracket 342.

During rotation of the second gear 340, the stopper 325 may move within the guide groove 346, and when the stopper 325 contacts an end of the guide groove 346, further rotation of the second gear 340 may be restricted.

The second gear 340 may include an interference protrusion 345 disposed at a position radially spaced apart from the central bracket 342. The interference protrusion 345 may protrude from the second gear 340 toward the tray assembly 240.

The interference protrusion 345 includes a portion that contacts the gear lever 350 when the first gear 330 rotates. When the gear lever 350 pushes the interference protrusion 345 upward, the second gear 340 may begin to rotate and may engage with the first gear 330. That is, the interference protrusion 345 may be a component that interferes with the gear lever 350 of the first gear 330 so that the second gear 340 begins to engage with the first gear 330.

The compression part 300 may include a rack gear 360 interlocked with the second gear 340. The rack gear 360 may extend in a tangential direction of the second gear 340 and may move upward or downward based on rotation of the second gear 340.

Here, "upward" may refer to a direction away from the ground on which the cabinet of the refrigerator is installed. The term "downward" may refer to a direction toward the ground.

The rack gear 360 may include a plurality of gear teeth 362 interlocked with the second gear portion 343 of the second gear 340. The plurality of gear teeth 362 may be linearly arranged.

The first bracket 320 may include a rail groove 326 guiding linear movement of the rack gear 360. The rail groove 326 may be formed at a side of the rack gear 360 and may be elongated in a vertical direction of the first bracket 320.

The rack gear 360 may include a rail 364 inserted into and moving along the rail groove 326. For example, the rail 364 may be disposed at a side end of the rack gear 360.

The compression part 300 may include a piston bracket 363 connecting the rack gear 360 and the piston 365. The piston bracket 363 may be provided at an upper end of the rack gear 360, and the piston 365 may be connected to the piston bracket 363 so as to extend downward. The piston 365 and the rack gear 360 may move integrally.

When the second gear 340 rotates in a first direction (for example, a counterclockwise direction in FIG. 13), the rack gear 360 and the piston 365 may move in a direction toward the cylinder 380. In some examples, when the second gear 340 rotates in a second direction (for example, a clockwise direction in FIG. 13), the rack gear 360 and the piston 365 may move in a direction away from the cylinder 380.

The compression part 300 may include a cylinder 380 defining a movement space for ice (powdered ice) generated in the ice-making part 200. Ice introduced into the cylinder 380 may be compressed by the reciprocating piston 365 into ice (molded ice) having a predetermined volume. The ice described herein may include frozen ice fragments or powder produced by mechanically separating a frozen ice body from the ice-making body and subsequently compressing the fragments or powder into a shaped ice piece. The ice fragments or powdered ice may have a water content and density suitable for the subsequent ice compressing or shaping operations described herein.

The cylinder 380 may extend downward along a tangential direction of the first circumferential surface 242a to form an accommodation space for ice.

The cylinder 380 may include a portion extending in a direction corresponding to a discharge direction of ice separated from the first circumferential surface 242a of the tray 241. For example, ice separated by the first blade 280 may fall downward, and the cylinder 380 may include a portion extending downward so that the falling ice may pass through the cylinder 380.

The compression part 300 may include, at an inlet side of the cylinder 380, a transfer pipe 370 for transferring ice (powdered ice) discharged from the ice-making part 200 into the cylinder 380. A space for accommodating the powdered ice may be formed inside the transfer pipe 370, and the powdered ice may move into the cylinder 380. In some examples, the compression part 300 includes a transfer passage or duct, and the transfer pipe 370 is an example of the transfer passage or duct.

The compression part 300 may include, at an outlet side of the cylinder 380, a discharge pipe 390 configured to provide predetermined resistance so that ice present in the cylinder 380 may be compressed or recombined.

For example, in order to provide the resistance, the discharge pipe 390 may be formed such that a cross-sectional area thereof decreases in a direction in which ice moves. The discharge pipe 390 may be made of an elastically deformable material, for example, silicone, in order to provide the resistance.

An outlet of the discharge pipe 390 may be open, and molded ice compressed or recombined while passing through the discharge pipe 390 may be discharged through the open outlet of the discharge pipe 390.

The cutter wall 395 may be disposed at a position spaced apart from the outlet of the discharge pipe 390 by a predetermined distance, and may interfere with the molded ice discharged through the discharge pipe 390.

The cutter wall 395 may include an inclined surface facing the discharge pipe 390, and the molded ice discharged from the discharge pipe 390 may be cut while interfering with the inclined surface. The cut ice may then fall into the ice bin 500.

Referring to FIGS. 11 and 12, the configuration of the transfer pipe 370 and the cylinder 380 will be described in a more detail.

The transfer pipe 370 may include a transfer body 371 forming an inlet 370a through which powdered ice separated from the tray 241 is introduced. The inlet 370a may be disposed adjacent to a tip portion of the first blade 280 that scrapes ice from the first circumferential surface 242a.

The transfer pipe 370 may include a guide surface 373 contacting the first blade 280. The guide surface 373 may be disposed at one side of the inlet 370a, and ice separated by the first blade 280 may be introduced into the transfer pipe 370 through the inlet 370a along the guide surface 373. An accommodation space 370b for ice may be formed inside the transfer pipe 370.

The transfer pipe 370 may include a first fastening portion 372a coupled to the first bracket 220 of the ice-making part 200. The transfer pipe 370 may include a second fastening portion 372b coupled to the cylinder 380.

The cylinder 380 may be fastened to an outlet side of the transfer pipe 370 and extend downward, and may include an internal space forming an accommodation space for ice. Ice collected at a lower portion of the transfer pipe 370 may be moved into the cylinder 380 by the piston 365.

Since the cylinder 380 also guides transfer of ice, the cylinder 380 may also be understood, in a broad sense, as constituting a part of a transfer pipe. Accordingly, the transfer pipe 370 may be referred to as a "first transfer pipe," and the cylinder 380 may be referred to as a "second transfer pipe."

The cylinder 380 may include a cylinder body 381 forming an accommodation space for ice. In order that ice may be easily compressed or recombined inside the cylinder body 381, an inner wall of the cylinder body 381 may define a cross-sectional area decreasing in a discharge direction of ice.

The cylinder 380 may include a cylinder fastening portion 383 fastened to the first bracket 220.

The compression part 300 may include a discharge pipe 390 provided at an outlet side of the cylinder 380 and configured to provide a force for compressing or recombining ice transferred within the cylinder 380.

The discharge pipe 390 may include a discharge pipe body 391 coupled to the cylinder 380 and an inclined portion 392 forming at least a portion of the discharge pipe body 391 and having a cross-sectional area decreasing in a direction in which ice is discharged. The discharge pipe 390 may include a discharge hole 393 through which compressed or recombined ice is discharged.

Since the piston 365 presses one side of the ice present in the cylinder 380 and resistance is provided at the other side by the discharge pipe 390, compression or recombination of powdered ice may be achieved. The compressed powdered ice may be formed into ice having a predetermined shape (ice in a third state, I2, molded ice, or third state ice) and may be discharged through the discharge hole 393 of the discharge pipe 390. In some examples, the third state ice may be heated before being discharged from discharge pipe 370 and generate fourth state ice. In some examples, the temperature of ice may sequentially increase from the first state ice to the fourth state ice based on the locations of ice. For example, the first state ice on the ice-making body may have a first temperature, and the second state ice separated from the ice-making body may have a second temperature higher than or equal to the first temperature. The third state ice molded into shape at an inlet side of the cylinder has a third temperature higher than or equal to the second temperature, and the fourth state ice at an outlet side of the cylinder may have a fourth temperature higher than the third temperature.

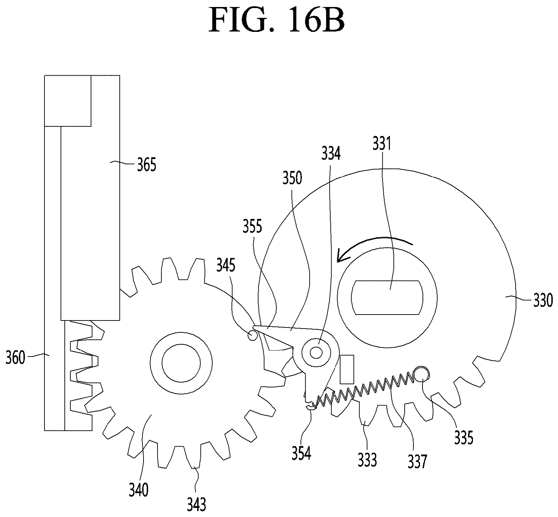

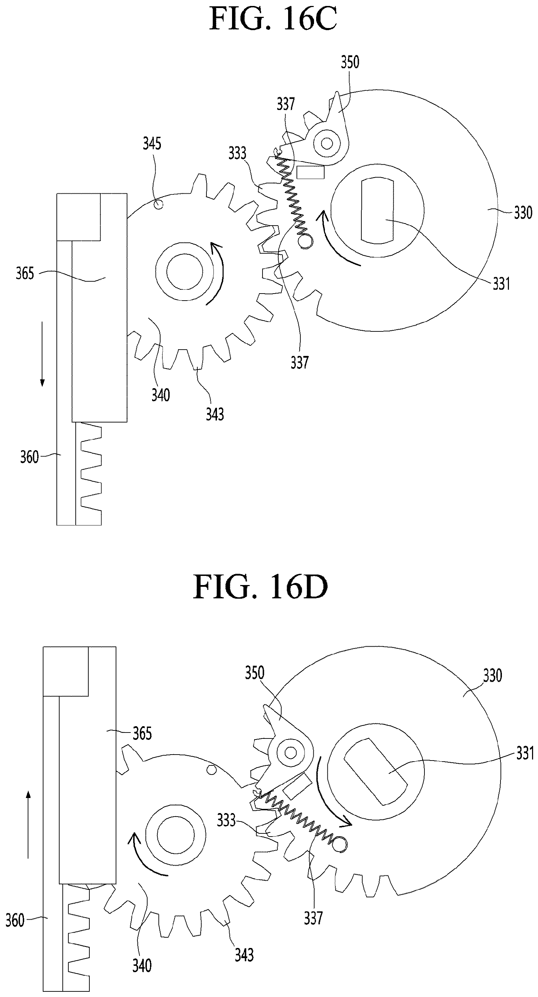

FIG. 16A is a view illustrating an example state in which a first gear rotates in a first direction and a gear lever begins to contact an interference protrusion, FIG. 16B is a view illustrating an example state in which the first gear rotates in the first direction and the gear lever rides over the interference protrusion, FIG. 16C is a view illustrating an example state in which the first gear rotates in a second direction and engages with a second gear, and a piston moves toward a cylinder, and FIG. 16D is a view illustrating an example state in which the first gear rotates in the first direction and engages with the second gear, and the piston moves in a direction away from the cylinder.

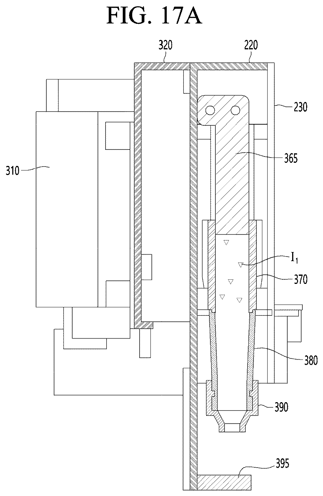

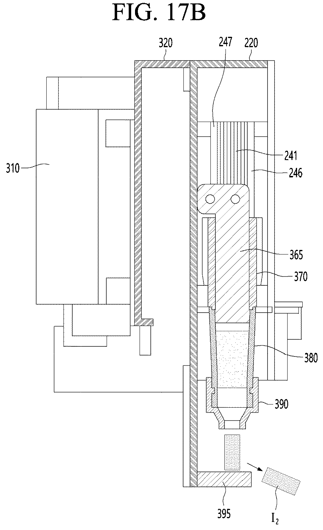

FIG. 17A is a cross-sectional view illustrating an example state in which the piston is located at a standby position, FIG. 17B is a cross-sectional view illustrating an example state in which the piston is located at a compression position,

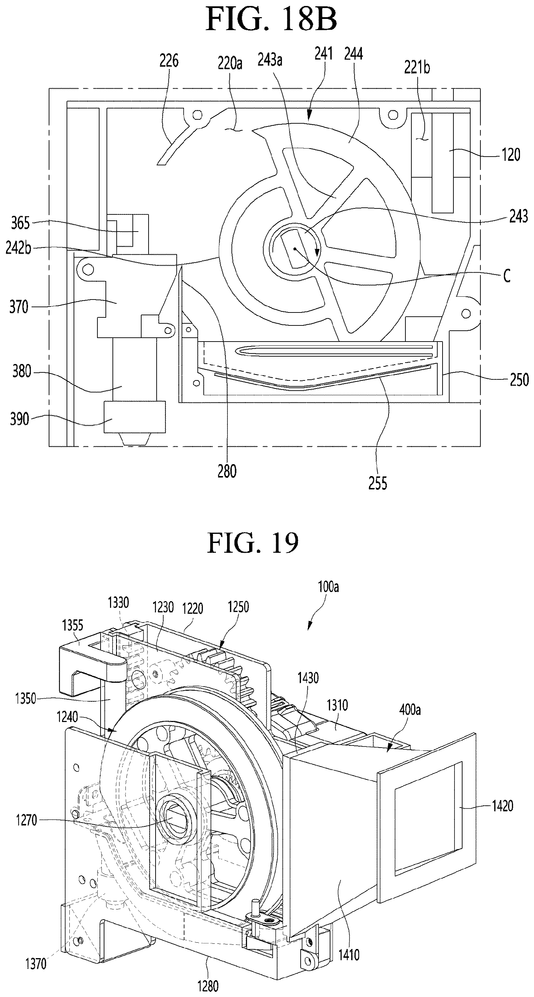

FIG. 18A is a view illustrating an example state of the ice maker when deicing is performed at the tray, and FIG. 18B is a view illustrating an example state of the ice maker when ice is compressed by the piston.

Referring to FIGS. 16A to 18B, operation of the tray 241, the gear assembly, and the piston 365 will be described.

FIG. 16A shows an arrangement of the gear assembly when the tray 241 is in an ice-making position. In the ice-making position of the tray 241, the first gear portion 333 of the first gear 330 and the second gear 343 of the second gear 340 may be located at positions where they are not engaged with each other.

In the ice-making position of the tray 241, the second gear 340 receives a force tending to rotate clockwise in FIG. 16A by restoring force of the gear spring 348, and rotation thereof in a counterclockwise direction may be restricted unless an external force is applied thereto.

In addition, since the stopper 325 is in an interfering state with an end of the guide groove 346, the second gear 340 may not further rotate clockwise. Accordingly, the second gear 340 may maintain the state of FIG. 16A unless an external force is applied thereto.

From the position of FIG. 16A, when the motor 310 is driven in one direction (forward direction) and the first gear 330 rotates, and the tray 241 may rotate in a counterclockwise direction through the first gear 330. When the first gear 330 rotates, the gear lever 350 may also rotate together therewith.

By rotation of the tray 241, deicing by the first blade 280 may be performed at the first circumferential surface 242a. Specifically, the tray 241 may rotate counterclockwise from the ice-making position of FIG. 18A, and deicing may be performed.

When the first gear 330 rotates, the first gear portion 333 of the first gear 330 and the second gear portion 340 of the second gear 340 may be located at positions where they are not engaged with each other.

FIG. 16B shows an example state in which, from the position of FIG. 16A, the first gear 330 has rotated nearly one full turn (360 degrees), and at this time, the second part 355 of the gear lever 350 may contact the interference protrusion 345 of the second gear 340.

In some examples, since the stopper 325 is in an interfering state with an end of the guide groove 346, the second gear 340 does not rotate clockwise, and the second part 355 of the gear lever 350 may ride over the interference protrusion 345.

Due to resistance generated when the second part 355 rides over the interference protrusion 345, the lever spring 337 may be tensioned. That is, by support force of the lever spring 337, the second part 355 may ride over the interference protrusion 345.

The state in which the second part 355 has ridden over the interference protrusion 345 corresponds to the state shown in FIG. 16A.

Thereafter, in the state of FIG. 16A, the motor 310 may be driven in the other direction (reverse direction). By driving of the motor 310, the first gear 330 rotates clockwise, and the second part 355 may also rotate clockwise.

During the rotation, the second part 355 may press the interference protrusion 345. That is, in the state of FIG. 16A, the second part 355 may push up the interference protrusion 345. At this time, since a force greater than restoring force of the gear spring 348 acts on the second gear 340, the second gear 340 may rotate slightly counterclockwise.

As the second gear 340 rotates, the second gear portion 343 of the second gear 340 may rotate slightly counterclockwise to a position where it may engage with the first gear portion 333 of the first gear 330. As the second gear portion 343 rotates, the second gear 340 begins to engage with the first gear 330 rotating clockwise.

FIG. 16C is a view showing an example state in which the first and second gears 330 and 340 are engaged with each other and the second gear 340 is rotating in a counterclockwise direction. At this time, a rotational force greater than restoring force of the gear spring 348 is acting on the second gear 340.

As the second gear 340 rotates, the rack gear 360 moves downward, and the piston 365 moves downward together with the rack gear 360 and may move through the internal space of the transfer pipe 370 to an inlet side of the cylinder 380. In this process, powdered ice inside the transfer pipe 370 may be introduced into the internal space of the cylinder 380 and may be compressed or recombined (compression or recombination process of ice).

During the compression or recombination process of ice, a compression position of the piston 365 is shown in FIG. 17B, and a state of the tray 241 is shown in FIG. 18B.

At least a portion of the piston 365 may be introduced into the internal space of the cylinder 380 so that the ice may be compressed. In some examples, the piston 365 may move only to the inlet side of the cylinder 380 and may not be introduced into the inside of the cylinder.

When the piston 365 reaches the compression position as shown in FIG. 17B, the stopper 325 interferes with an end of the guide groove 346 of the second gear 340, thereby preventing further downward movement of the piston 365.

After the piston 365 reaches the compression position, the motor 310 is again driven in the forward direction, and as shown in FIG. 16D, the first and second gears 330 and 340 are engaged with each other so that the first gear 330 may rotate in a counterclockwise direction and the second gear 340 may rotate in a clockwise direction.

As the second gear 340 rotates, the rack gear 360 and the piston 365 rise, and the piston 365 may return to the standby position as shown in FIGS. 17A and 18A. In some implementations, when the second gear 340 rotates in the clockwise direction, restoring force of the gear spring 348 may readily act on the second gear 340.

In this way, by interlocking operation of the motor 310, the gear assembly 330, 340 and 360, and the piston 365, ice making and deicing of the tray 241 and ice compression action by the piston 365 may be readily performed.

Hereinafter, an additional example of the present disclosure will be described. This example may differ from the examples described above only in some configurations, differences therebetween will mainly be described, and descriptions and reference numerals of the previous examples will be incorporated for the same parts.

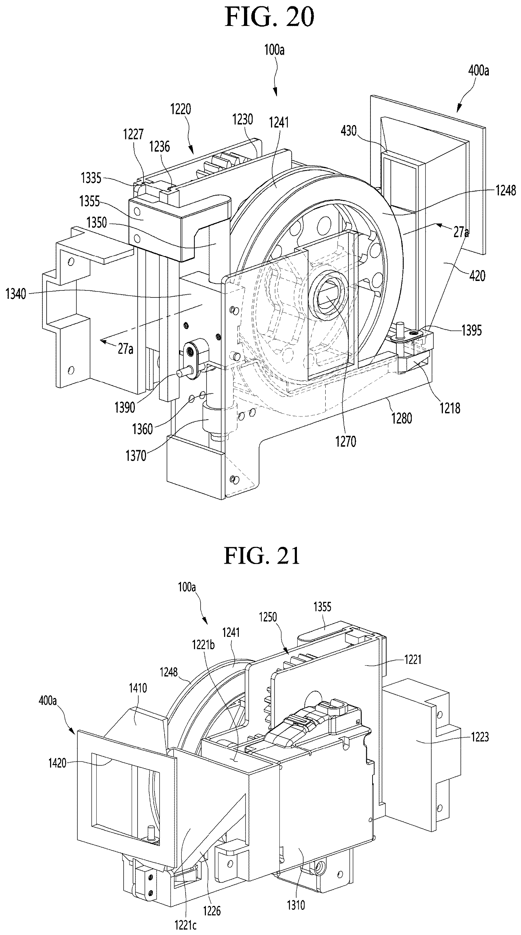

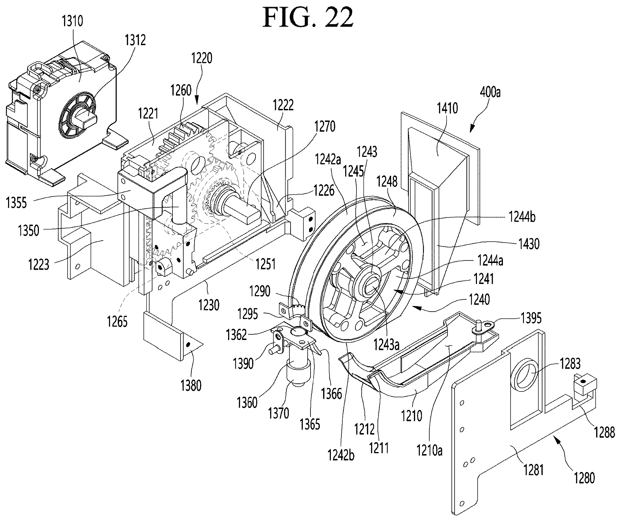

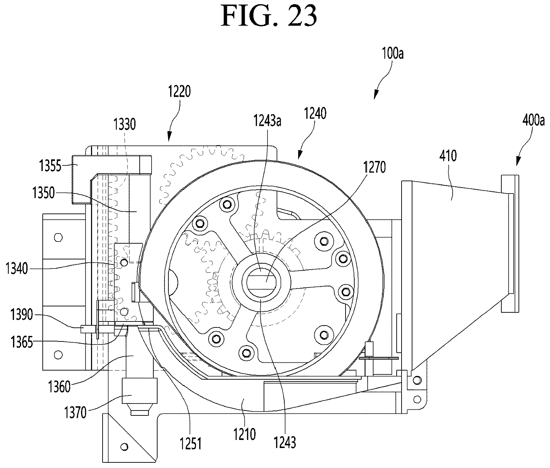

FIG. 19 is a front-left perspective view illustrating an example configuration of an ice maker, FIG. 20 is a front-right perspective view illustrating an example configuration of the ice maker, FIG. 21 is a rear perspective view illustrating an example configuration of the ice maker, FIG. 22 is an exploded view illustrating an example configuration of the ice maker, and FIG. 23 is a front view illustrating a partial configuration of the ice maker.

Referring to FIGS. 19 to 23, the ice maker 100a may include a motor 1310 generating a driving force and a tray assembly 1240 movably provided by the motor 1310.

The ice maker 100a may include ice-making brackets 1220 and 1280 forming a cold-air flow path. A cold-air duct 400a is connected to one side of the ice-making brackets 1220 and 1280, and cold air supplied through the cold-air duct 400a may flow through the cold-air flow path formed inside the ice-making brackets 1220 and 1280.

The cold-air duct 400a may include a duct body 1410 extending from the side wall 81 toward the ice-making brackets 1220 and 1280, an inlet portion 1420 formed at one end of the duct body 1410 and connected to the supply portion 82 of the side wall 81, and an outlet portion 1430 formed at the other end of the duct body 410 and connected to the ice-making brackets 1220 and 1280 to discharge cold air.

The ice-making brackets 1220 and 1280 may include a first bracket 1220 supporting a gear assembly 1250 and a second bracket 1280 provided at one side of the first bracket 1220 and supporting the tray assembly 1240. The tray assembly 1240 may be disposed in a space between the first bracket 1220 and the second bracket 1280.

The ice maker 100a may include a reservoir 1210 storing water. The reservoir 1210 may supply water to the tray assembly 240.

The first bracket 1220 may include a supply pipe bracket 1221c guiding a water supply pipe (not shown) for supplying water to the reservoir 1210. The supply pipe bracket 1221c may protrude from a first wall 1221 of the first bracket 1220.

The supply pipe bracket 1221c may include a pipe communication portion 1221b into which the water supply pipe is inserted, and at least a portion of the water supply pipe may extend into the ice-making brackets 1220 and 1280 through the pipe communication portion 1221b.

The tray assembly 1240 may include a tray 1241 receiving water and performing ice making. For example, the tray 1241 may be rotatably provided. The tray 1241 may form a circumferential surface defining a storage space for water.

The tray 1241 may include circumferential surfaces 1242a and 1242b (also referred to as circumferential walls). For example, the tray 1241 may have a drum shape having the circumferential surfaces. The circumferential surfaces may form an outer circumferential surface of the drum. That is, the circumferential surfaces 1242a and 1242b may be understood as extending in a circumferential direction to form an outer circumferential surface of the tray 1241.

The circumferential surfaces 1242a and 1242b may include a first circumferential surface 1242a to which water is supplied. The first circumferential surface 1242a may form at least a portion of the outer circumferential surface of the tray 1241. When positioned to face the reservoir 1210, the first circumferential surface 1242a may include a surface contacting water stored in the reservoir 1210.

The first circumferential surface 1242a may be disposed adjacent to the blade 1290 such that ice formed on the first circumferential surface 1242a contacts the blade 1290.

The circumferential surfaces 1242a and 1242b may include a second circumferential surface 1242b connected to the first circumferential surface 1242a and to which water is not supplied. When positioned to face the reservoir 1210, the second circumferential surface 1242b may include a surface that does not contact water stored in the reservoir 1210.

The second circumferential surface 1242a may be disposed relatively farther from the blade 280 such that ice formed on the second circumferential surface 1242b does not contact the first blade 1290.

When the first circumferential surface 1242a is positioned to contact cold air and freeze, the second circumferential surface 1242b is arranged to face the reservoir 1210. At this time, since the second circumferential surface 1242b does not contact water of the reservoir 1210, the reservoir 1210 may not be cooled by the tray 1241, which is at a low temperature. Accordingly, water stored in the reservoir 1210 may be prevented from freezing.

The tray 1241 may include side walls provided at both sides of the circumferential surfaces 1242a and 1242b, and the tray assembly 1240 may include tray covers 1248 covering the side walls. The tray covers 1248 may be coupled to both sides of the tray 1241. The tray covers 1248 may be made of a material having low thermal conductivity, for example, a non-metallic material. The non-metallic material may include a plastic material.

The tray 1241 may include an inner circumferential wall 1244a connected to the side walls and forming an inner circumferential surface of the tray 1241. The inner circumferential wall 1244a may form a surface opposite to the circumferential surfaces 1242a and 1242b.

The tray 1241 may include a center bracket 1243 forming a center portion (or central shaft) of the tray 1241. The center bracket 1243 may protrude to both sides of the tray 1241 in an axial direction.

The center bracket 1243 may be coupled to the driving gear 1251. For example, the center bracket 1243 may include an insertion hole 1243a into which a gear shaft 1270 of the driving gear 1251 is inserted.

The tray 1241 may include extension walls 1244b extending from the center bracket 1243 toward the inner circumferential wall 1244a. For example, the extension walls 1244b may extend radially from the center bracket 1243. A plurality of the extension walls 1244b may be provided, and the plurality of extension walls 1244b may be spaced apart from each other and arranged in a circumferential direction.

The tray 1241 may define tray holes 1245. The tray holes 1245 may be understood as holes penetrating the tray 1241 in an axial direction. Cold air may flow through the tray holes 1245, thereby increasing a cooling area of the tray 1241.

The tray holes 1245 may be understood as spaces defined by the center bracket 1243, the plurality of extension walls 1244b, and the inner circumferential wall 1244a. A plurality of the tray holes 1245 may be formed, and the plurality of tray holes 1245 may be arranged in a circumferential direction of the tray 1241.

The first bracket 1220 may include a first wall 1221 on which the motor 1310 is supported. The first wall 1221 may include an insertion hole through which a motor shaft 1312 of the motor 1310 passes, and the motor shaft 1312 may pass through the first wall 1221 and be coupled to a central portion of the driving gear 1251.

Driven gears 1260 and 1265 may be rotatably supported on the first wall 1221. For example, central portions (or central shafts) of the driven gears 1260 and 1265 may be inserted into support holes of the first wall 1221.

The ice maker 100a may include a second wall 1222 and a third wall 1223 connected to both ends of the first wall 1221. The second wall 1222 and the third wall 1223 may provide support structures for some components constituting the ice maker 100a.

The second wall 1222 may form at least a portion of the supply pipe bracket 1221c. The second wall 1222 may be obliquely provided inside the supply pipe bracket 1221c and may include a guide surface 1226 guiding water discharged from the water supply pipe to the reservoir 1210. A discharge end of the guide surface 1226 may be disposed adjacent to the reservoir 1210.

The reservoir 1210 may be disposed below the tray assembly 1240. The reservoir 1210 may include a case having a predetermined capacity, and water discharged from the water supply pipe may flow along the guide surface 1226 and may be introduced into the reservoir 1210.

The reservoir 1210 may define a water storage space 1210a and may include first support steps 1211 supporting the cylinder 1360. The first support steps 1211 may be disposed on both sides of a front end of the reservoir 1210 so as to support both ends of the cylinder bracket 1365.

The reservoir 1210 may include a second support step 1212 supporting a support wall 1366 of the cylinder 1360. The second support step 1212 may be disposed between the two first support steps 1211 and may be formed by recessing a portion of the front end of the reservoir 1210.

The support wall 1366 of the cylinder 1360 may be understood as a component extending from the cylinder bracket 1365 toward the front end side of the reservoir 1210 so as to guide ice to the reservoir 1210 when a portion of the ice separated from the tray 1241 is not introduced into the cylinder 1360.

The reservoir 1210 may include a support bracket 1218 supported by the second bracket 1280. The support bracket 1218 may be disposed at a position adjacent to a rear end of the reservoir 1210.

The second bracket 1280 may include a support groove 1288 formed in the cover wall 1281 and supporting the reservoir 1210. The support bracket 1218 of the reservoir 1210 may be inserted into and supported by the support groove 1288.

A first temperature sensor 1390 may be installed on the cylinder 1360. The first temperature sensor 1390 may be supported by the cylinder bracket 1365 and, for example, may contact a surface of the cylinder 1360 to sense a temperature of the cylinder 1360.

A second temperature sensor 1395 may be installed on the reservoir 1210. The second temperature sensor 1395 may be installed on a wall of the reservoir defining the water storage space 1210a and may sense a temperature of the reservoir or a temperature of water stored in the reservoir.

The ice maker 100a may include a blade 1290 contacting the ice made on the tray 1241 in order to separate the ice. The blade 1290 may be disposed adjacent to a rotational path of the tray 1241. In particular, the blade 1290 may be disposed adjacent to the first circumferential surface 1242a when the tray 1241 rotates.

The ice maker 100a may include a transfer pipe coupling portion 1295 coupling the blade 1290 to the transfer pipe 1340. The transfer pipe coupling portion 1295 may extend in both lateral directions of the blade 1290 and may be coupled to one surface of the transfer pipe 1340. The transfer pipe coupling portion 1295 may be integrally formed with the blade 1290.

The second bracket 1280 may include a cover wall 1281 shielding one side of the tray assembly 1240. The cover wall 1281 may form at least one surface of a cold-air flow path formed inside the ice-making brackets 1220 and 1280.

The cover wall 1281 may include a through portion 1283 by which the center bracket 1243 of the tray assembly 1240 is supported. The tray assembly 1240 may rotate about the center bracket 1243.

The tray assembly 1240 and the reservoir 1210 may be disposed in a space between the second bracket 1280 and the gear cover 1230.

The gear cover 1230 may be disposed so as to cover one side of the gear assembly 1250. The gear assembly 1250 may be disposed in a space between the first bracket 1220 and the gear cover 1230.

The gear cover 1230 may include a hole through which the gear shaft 1270 passes, and the gear shaft 1270 may be coupled to the gear assembly 1250 through the hole of the gear cover 1230.

The transfer pipe 1340 may be disposed in a space between the second bracket 1280 and the gear cover 1230. The transfer pipe 1340 may be integrally formed with the gear cover 1230 or may be coupled to one surface of the gear cover 1230. The second bracket 1280 may be coupled to the transfer pipe 1340 by a predetermined fastening member.

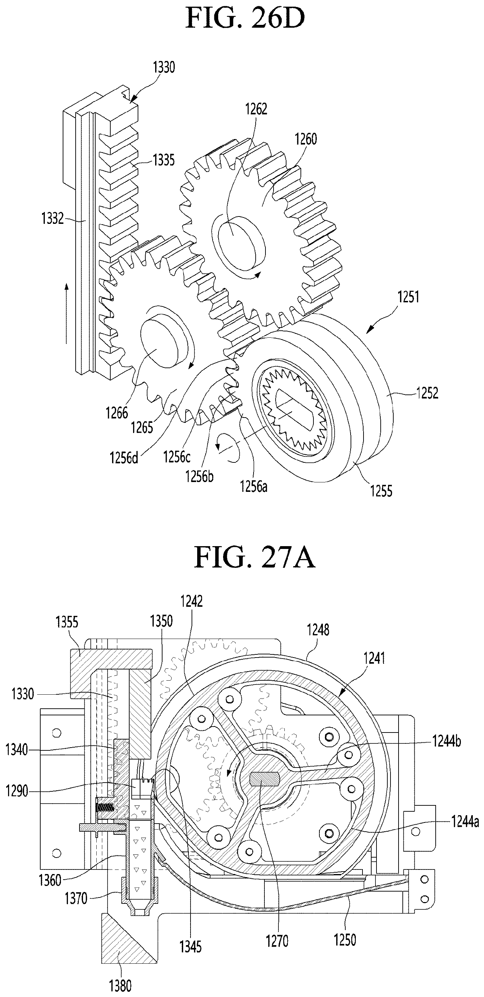

The transfer pipe 1340 may include one surface to which the blade 1290 is coupled, and the one surface may be understood as a surface facing the circumferential surfaces 1242a and 1242b. An end of the transfer pipe 1340, for example, an upper end thereof, may include an inlet 1345 (see FIG. 27A) through which ice is introduced.

The cylinder 1360 may be disposed in a space between the second bracket 1280 and the gear cover 1230. The cylinder 1360 may be coupled to an end of the transfer pipe 1340 and may include an inlet 1362 through which ice transferred through the transfer pipe 1340 is introduced. The cylinder 1360 may include a cylinder bracket 1365 coupled to the transfer pipe 1340.

The ice maker 100a may include a piston 1350 movably provided to compress or recombine ice separated from the tray assembly 240. The piston 1350 may move by driving of the motor 1310.

The piston 1350 may be disposed outside the transfer pipe 1340 and may be provided to linearly move into the transfer pipe 1340, for example, downward with reference to FIG. 22.

The ice maker 100a may include a power transmission device for transmitting driving force of the motor 1310 to the piston 1350. The power transmission device may include a gear assembly 1250.

The gear assembly 1250 may include a driving gear 1251 coupled to the motor shaft 1312 and rotating therewith. The gear assembly 1250 may include a gear shaft 1270 coupled to the driving gear 1251 and extending toward the tray assembly 1240.

The gear shaft 1270 may be coupled to the center bracket 1243 of the tray 1241. When the motor 310 is driven, driving force of the motor 310 is transmitted to the tray assembly 1240 through the driving gear 1251, and the tray 1241 may rotate.

The gear assembly 1250 may include driven gears 1260 and 1265 engaged with the driving gear 1251. The driven gears 1260 and 1265 may include a first driven gear 1260 and a second driven gear 1265 engaged with each other.

For convenience of description, the driving gear 1251 may be referred to as a "first gear," the first driven gear 1260 may be referred to as a "second gear," and the second driven gear 1265 may be referred to as a "third gear."

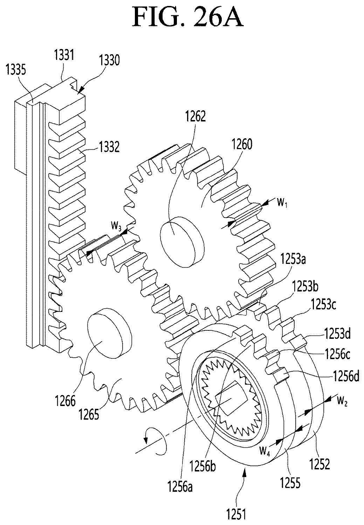

The gear assembly 1250 may include a rack gear 1330 engaged with the second driven gear 1265. The rack gear 1330 may include a rack body 1331 extending vertically corresponding to a moving direction of the piston 1350, and a plurality of gear teeth 1332 formed on the rack body 1331 and engaged with the second driven gear 1265 (see FIG. 26A).

The ice maker 100a may include a piston bracket 1355 connecting the rack gear 1330 and the piston 1350. The piston bracket 1355 may be provided at an upper end of the rack gear 1330, and the piston 1350 may be connected to the piston bracket 1355 and may be arranged to extend downward. The piston 1350 and the rack gear 1330 may integrally move by the piston bracket 1355.

The first bracket 1220 may include a first rail groove 1227 guiding linear movement of the rack gear 1330. The first rail groove 1227 may be disposed at one lateral side of the rack gear 1330 and may be elongated in a vertical direction of the first bracket 1220.

The gear cover 1230 may include a second rail groove 1236 guiding linear movement of the rack gear 1330. The rail groove 1236 may be disposed at the other lateral side of the rack gear 1330 and may be elongated in a vertical direction of the gear cover 1230.

The rack gear 1330 may include rails 1335 inserted into and moving along the first and second rail grooves 1227 and 1236. For example, the rails 1335 may be disposed at both lateral ends of the rack gear 1330.

Ice introduced into the transfer pipe 1340 may be compressed or recombined by the reciprocating piston 1350 into ice having a predetermined volume (molded ice). The cylinder 1360 may extend downward along a tangential direction of the first circumferential surface 1242a and may form an accommodation space for ice.

The cylinder 1360 may include a portion extending in a direction corresponding to a discharge direction of ice separated from the first circumferential surface 1242a of the tray 1241.

The ice maker 100a may include a discharge pipe 1370 provided at an outlet side of the cylinder 1360 and providing predetermined resistance so that ice present in the cylinder 1360 may be compressed. Description of the discharge pipe 1370 may incorporate the description of the discharge pipe of the example described above.

The ice maker 100a may include a cutter wall 1380 supported by the gear cover 1230. The cutter wall 1380 may be disposed at a position spaced apart from an outlet of the discharge pipe 1370 by a predetermined distance and may interfere with molded ice discharged through the discharge pipe 1370. The cutter wall 1380 may include an inclined surface facing the discharge pipe 1370.

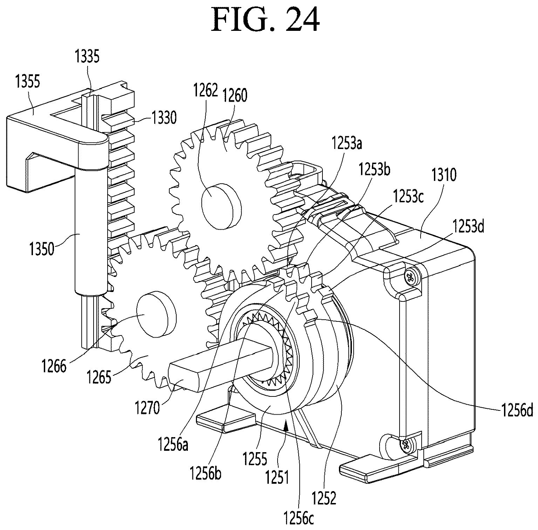

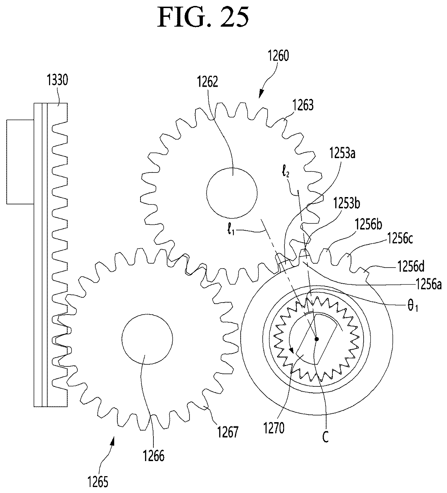

FIG. 24 is a view illustrating an example configuration of a gear assembly and a piston, and FIG. 25 is a front view illustrating an example configuration of the gear assembly.

Referring to FIGS. 24 and 25, the gear assembly 1250 may include a driving gear 1251 connected to the motor 1310, and a first driven gear 1260 and a second driven gear 1265 engaged with the driving gear 1251.

The driving gear 1251 may be understood as a unidirectionally rotating gear rotating in one direction (for example, counterclockwise with reference to FIG. 25).

The driving gear 1251 may include a compression gear portion 1252 and a return gear portion 1255. A gear shaft 1270 of the driving gear 1251 is coupled to the compression gear portion 1252 and the return gear portion 1255, such that when the driving gear 1251 rotates, the compression gear portion 1252 and the return gear portion 1255 may rotate together. The gear shaft 1270 may be referred to as a "central shaft."

For example, the compression gear portion 1252 may be disposed between the return gear portion 1255 and the motor 1310. The compression gear portion 1252 and the return gear portion 1255 may be spaced apart from each other in an axial direction.

The compression gear portion 1252 may include an outer circumferential surface on which a plurality of gear teeth 1253a, 1253b, 1253c, and 1253d are formed. The plurality of gear teeth may be provided only on a portion of the entire outer circumferential surface of the compression gear portion 1252. That is, the compression gear portion 1252 may form an incomplete gear portion. For example, the compression gear portion 1252 may be provided only in a region forming a central angle of about 60 degrees with respect to a center of the compression gear portion 1252.

The return gear portion 1255 may include an outer circumferential surface on which a plurality of gear teeth 1256a, 1256b, 1256c, and 1256d are formed. The plurality of gear teeth may be provided only on a portion of the entire outer circumferential surface of the return gear portion 1255, rather than on the entire outer circumferential surface thereof. That is, the return gear portion 1255 may form an incomplete gear portion. For example, the return gear portion 1255 may be provided only in a region forming a central angle of about 60 degrees with respect to a center of the return gear portion 1255.

With respect to the center shaft 1270 of the driving gear 1251, the plurality of gear teeth 1253a, 1253b, 1253c, and 1253d of the compression gear portion 1252 and the plurality of gear teeth 1256a, 1256b, 1256c, and 1256d of the return gear portion 1255 may be formed to have a phase difference in a circumferential direction.

For example, when the driving gear 1251 rotates in one direction (counterclockwise with reference to FIG. 25), the plurality of gear teeth 1253a, 1253b, 1253c, and 1253d of the compression gear portion 1252 may first engage with the first driven gear 1260, and thereafter the plurality of gear teeth 1256a, 1256b, 1256c, and 1256d of the return gear portion 1255 may engage with the second driven gear 1265. Accordingly, the plurality of gear teeth of the compression gear portion 1252 and the return gear portion 1255 may be formed to have a phase difference in the circumferential direction.

More specifically, referring to FIG. 25, among the plurality of gear teeth of the compression gear portion 1252, a first gear tooth 1253a disposed at one end of the compression gear portion 1252 and, among the plurality of gear teeth of the return gear portion 1255, a first gear tooth 1256a disposed at one end of the return gear portion 1256 may have a phase difference with respect to a center C of the driving gear 1251.

A first extension line ℓ1 connecting the center C of the driving gear 1251 and the first gear tooth 1253a of the compression gear portion 1252, and a second extension line ℓ2 connecting the center C of the driving gear 1251 and the first gear tooth 1256a of the return gear portion 1255 may form a predetermined angle θ1. For example, the predetermined angle may be about 30 degrees.

The first driven gear 1260 may be disposed to engage with the compression gear portion 1252. In some implementations, the first driven gear 1260 may be disposed not to engage with the return gear portion 1255.

The first driven gear 1260 may include a center bracket 1262 forming a center. The center bracket 1262 may protrude from the first driven gear 1260 and may be supported by the first bracket 1220. The first driven gear 1260 may include an outer circumferential surface forming a plurality of gear teeth 1263. The plurality of gear teeth 1263 may be formed on the entire outer circumferential surface of the first driven gear 1260.

The second driven gear 1265 may be disposed to engage with the return gear portion 1255. In some implementations, the second driven gear 1265 may be disposed not to engage with the compression gear portion 1252.

The first driven gear 1260 and the second driven gear 1265 may be disposed to engage with each other.

The plurality of gear teeth formed on the first driven gear 1260 may have an axial width so as to engage with the gear teeth of the compression gear portion 1252 and the gear teeth of the second driven gear 1265. That is, an axial width W1 of the gear teeth of the first driven gear 1260 may be greater than an axial width W2 of the gear teeth of the compression gear portion 1252. The axial width W1 is defined such that the first driven gear 1260 may not be engaged with the return gear portion 1255.

In other words, the plurality of gear teeth formed on the first driven gear 1260 may include a first portion engaging with the gear teeth of the compression gear portion 1252 and a second portion engaging with the gear teeth of the second driven gear 1265. The first portion and the second portion may be arranged in an axial direction.

The plurality of gear teeth formed on the second driven gear 1265 may have an axial width so as to engage with the gear teeth of the first driven gear 1260 and the gear teeth of the return gear portion 1255. That is, an axial width W3 of the gear teeth of the second driven gear 1265 may be greater than an axial width W4 of the gear teeth of the return gear portion 1255. The axial width W3 is defined such that the second driven gear 1265 may not be engaged with the compression gear portion 1252.

In other words, the plurality of gear teeth formed on the second driven gear 1265 may include a first portion engaging with the gear teeth of the first driven gear 1260 and a second portion engaging with the gear teeth of the return gear portion 1255. The first portion and the second portion may be arranged in an axial direction.

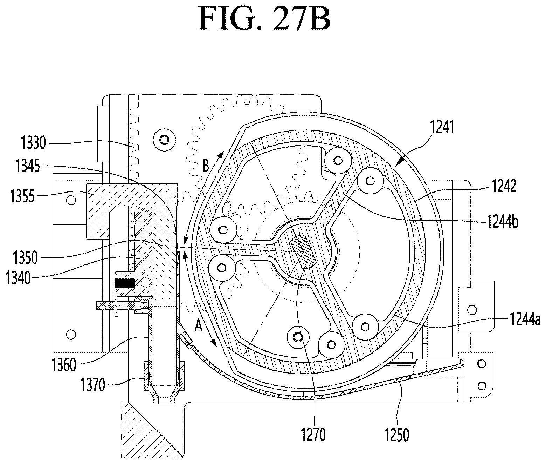

FIGS. 26A to 26D are views illustrating an operation of the gear assembly, FIG. 27A is a view illustrating a state when deicing occurs at the tray, and FIG. 27B is a view illustrating a compression operation of the piston.

Referring to FIGS. 26A to 27B together with FIG. 25, when the driving gear 1251 rotates counterclockwise with reference to FIG. 25, the driving gear 1251 may rotate alone without engaging with the first driven gear 1260 and the second driven gear 1265.

A state in which the driving gear 1251 rotates alone is shown in FIG. 26A, and at this time the tray assembly 1240 may rotate counterclockwise by the driving gear 1251 as shown in FIG. 27A.

In the state of FIG. 27A, as the tray assembly 1240 rotates, deicing may be performed on the first circumferential surface 1242a of the tray 1241 (deicing operation). That is, the first circumferential surface 1242a rotates while being disposed adjacent to the blade 1290, and the blade 1290 may contact ice on the first circumferential surface 1242a to separate the ice.

The deicing operation may be performed during a section in which the first circumferential surface 1242a passes the blade 1290. The first circumferential surface 1242a may be formed in a region corresponding to only a portion of the entire outer circumferential surface (central angle of 360 degrees) of the tray 1241, that is, a first central angle θ11. For example, as shown in FIG. 27B, the first central angle θ11 may be about 220 to 240 degrees.

The second circumferential surface 1242b may be formed in a region corresponding to a remaining portion of the outer circumferential surface, for example, a region corresponding to a second central angle θ12. For example, the second central angle θ12 may be about 120 to 140 degrees.

During the deicing process, the tray 1241 rotates while the first driven gear 1260 and the second driven gear 1265 do not rotate, so that the rack gear 1330 and the piston 1350 may remain stationary without movement.

In some implementations, the first circumferential surface 1242a of the tray 1241 on which deicing has been performed may be immersed in or contacted with water of the reservoir 1210 so that water may be supplied (water supply process). That is, after the deicing process, a water supply process to the tray 1241 may be subsequently performed.

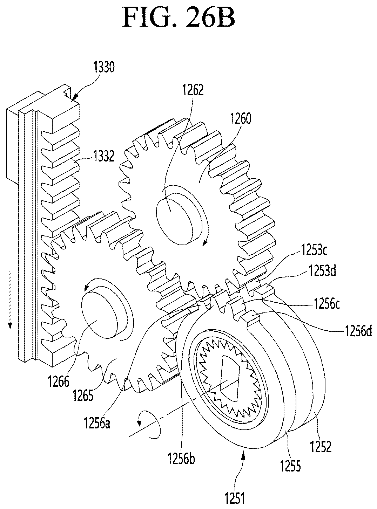

After the tray 1241 rotates so that the deicing process is performed, the driving gear 1251 may continue to rotate so that the compression gear portion 1252 may begin to engage with the first driven gear 1260. This state is shown in FIG. 26B.

The first driven gear 1260 rotates clockwise while engaging with the compression gear portion 1252 of the driving gear 1251, and the second driven gear 1265 may rotate clockwise while engaging with the first driven gear 1260.

The rack gear 1330 moves downward while engaging with the second driven gear 1265, and the piston 1350 may move toward the cylinder 1360, for example downward. The piston 1350 moves through the internal space of the transfer pipe 1340 and may push ice inside the transfer pipe 1340 into the cylinder 1360 (compression process).

The compression process may be performed during a section in which the first driven gear 1260 engages with the compression gear portion 1252. At this time, the state of the tray 1241 is shown in FIG. 27B. FIG. 27B shows a state in which the piston 1350 moves to a maximum compression position. The compression process may be performed during a section in which an "A" region of the second circumferential surface 1242a passes a lateral side of the blade 1290, for example during a section in which the tray 1241 rotates by about 60 degrees.

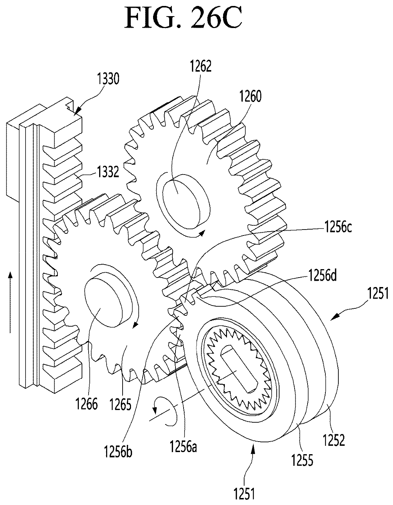

When the compression process is completed, as shown in FIG. 26C, engagement between the compression gear portion 1252 and the first driven gear 1260 is released, and the return gear portion 1255 and the second driven gear 1265 begin to engage with each other.

The second driven gear 1265 may rotate clockwise while engaging with the return gear portion 1255, and the first driven gear 1260 may rotate counterclockwise while engaging with the second driven gear 1265.

As the second driven gear 1265 rotates counterclockwise, the rack gear 1330 may move upward and the piston 1350 may move in a direction away from the cylinder 1360, for example upward. Accordingly, the piston 1350 may return to a return position (return process). A state in which the piston 1350 has returned to the return position is shown in FIG. 26D.

When the piston 1350 performs the return process, a region "B" of the second circumferential surface 1242b shown in FIG. 27B passes a lateral side of the blade 1290.

When the return process is completed and the driving gear 1251 further rotates, engagement between the driving gear 1251 and the first and second driven gears 1260 and 1265 may stop. When the driving gear 1251 rotates slightly further from the state shown in FIG. 26D, engagement between the driving gear 1251 and the first and second driven gears 1260 and 1265 may stop.

After the return of the piston 1350 is completed, an ice-making process in which water supplied to the first circumferential surface 1242a of the tray 1241 is frozen may be performed. During the ice-making process, the motor 1310 may stop so that rotation of the driving gear 1251 and the first and second driven gears 1260 and 1265 stops and remains in a standby state. At this time, a state of the tray assembly 1240 is shown in FIG. 27A.

When the ice-making process is performed for a predetermined time (for example, about 30 seconds to 1 minute), ice making may be recognized as completed, and the motor 1310 may start to operate.

According to the operation of the motor 1310, operation of the gear assembly according to FIG. 26A and rotation of the tray 1241 according to FIG. 27A may start, and the deicing process of the tray 1241 may be performed again.

In this manner, the deicing process, the compression process, the return process, and the ice-making process may be repeatedly performed.

Thus, according to driving of the motor 1310, the driving gear 1251 rotates in one direction so that rotation of the tray 1241 is performed, and while the compression gear portion 1252 and the return gear portion 1255 of the driving gear 1251 engage with the first and second driven gears 1260 and 1265, the deicing process, the compression process, the return process, and the ice-making process of the tray 1241 may be easily performed.

## Claims

1. A refrigerator comprising:
a cabinet that defines a storage space;
a door configured to open and close at least a portion of the storage space;
an ice-making body rotatably provided at the door, the ice-making body comprising a circumferential portion configured to receive water and to generate ice;
a cylinder that defines a space configured to receive the ice separated from the circumferential portion;
a motor configured to provide driving force to the ice-making body;
a gear assembly configured to transmit the driving force of the motor to the ice-making body; and
a piston configured to move linearly relative to the cylinder based on operation of the gear assembly and to move the ice separated from the circumferential portion to the cylinder.

2. The refrigerator of claim 1, further comprising:
a reservoir provided at a side of the ice-making body and configured to store water to be supplied to the circumferential portion of the ice-making body.

3. The refrigerator of claim 1 or 2, further comprising:
a blade disposed at a side of the cylinder and configured to face the circumferential portion and to contact the ice generated on the circumferential portion.

4. The refrigerator of any one of claims 1 to 3, wherein the circumferential portion of the ice-making body includes:
a first circumferential portion having a first radial distance from a rotation center of the ice-making body, the first circumferential portion being configured to receive water; and
a second circumferential portion having a second radial distance less than the first radial distance, the second circumferential portion being configured not to receive water.

5. The refrigerator of any one of claims 1 to 4, wherein the gear assembly comprises a first gear connected to the motor and the ice-making body, and
wherein the motor is configured to drive bidirectionally and to rotate the first gear in a first direction and a second direction.

6. The refrigerator of claim 5, wherein the gear assembly further comprises a second gear engaged with the first gear,
wherein the first gear is an incomplete gear having gear teeth disposed only on a portion of an outer circumferential surface of the first gear, and
wherein the second gear is an incomplete gear having gear teeth disposed only on a portion of an outer circumferential surface of the second gear.

7. The refrigerator of claim 6, wherein the second gear comprises an interference protrusion, and
wherein the gear assembly further comprises:
a gear lever rotatably disposed at the first gear and configured to contact the interference protrusion of the second gear; and
a lever spring having (i) a first end connected to the gear lever and (ii) a second end supported by the first gear.

8. The refrigerator of claim 6 or 7, further comprising a gear bracket that supports the gear assembly,
wherein the second gear defines a guide groove,
wherein the gear bracket comprises:
a receiving bracket that supports a central portion of the second gear, and
a stopper inserted into the guide groove of the second gear.

9. The refrigerator of claim 8, further comprising:
a torsion spring having ends that are supported by the second gear and the gear bracket.

10. The refrigerator of any one of claims 6 to 9, wherein the gear assembly further comprises a rack gear engaged with the second gear and connected to the piston.

11. The refrigerator of any one of claims 5 to 10, wherein the first gear comprises a compression gear portion and a return gear portion that are arranged in an axial direction of the first gear, and
wherein the compression gear portion and the return gear portion are connected to a center shaft and configured to rotate together.

12. The refrigerator of claim 11, wherein the compression gear portion is an incomplete gear having gear teeth disposed only on a portion of an outer circumferential surface of the compression gear portion, and
wherein the return gear portion is an incomplete gear having gear teeth disposed only on a portion of an outer circumferential surface of the return gear portion.

13. The refrigerator of claim 11 or 12, wherein the gear assembly further comprises:
a second gear engaged with the compression gear portion and not engaged with the return gear portion, wherein an axial width of the second gear is greater than an axial width of the compression gear portion; and
a third gear engaged with the second gear.

14. The refrigerator of claim 13, wherein an axial width of the third gear is greater than an axial width of the return gear portion, and the third gear is engaged with the return gear portion and not engaged with the compression gear portion.

15. The refrigerator of claim 13, further comprising:
a rack gear engaged with the third gear and connected to the piston.
